(19) Europäisches Patentamt
European Patent Office
Office européen des brevets

(11) EP 4 230 433 A1

(12) **EUROPEAN PATENT APPLICATION**
published in accordance with Art. 153(4) EPC

(43) Date of publication:
**23.08.2023 Bulletin 2023/34**

(21) Application number: **21879976.5**

(22) Date of filing: **07.10.2021**

(51) International Patent Classification (IPC):
***B60C 1/00*** *(2006.01)* ***C08F 36/04*** *(2006.01)*
***C08G 81/02*** *(2006.01)* ***C08L 9/00*** *(2006.01)*
***C08K 3/011*** *(2018.01)* ***C08K 3/013*** *(2018.01)*

(52) Cooperative Patent Classification (CPC):
**B60C 1/00; C08F 36/04; C08G 81/02; C08K 3/011; C08K 3/013; C08L 9/00**

(86) International application number:
**PCT/JP2021/037212**

(87) International publication number:
**WO 2022/080236 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2020 JP 2020174156**

(71) Applicants:
- **ZS Elastomers Co., Ltd.**
  **Tokyo 100-8246 (JP)**
- **SUMITOMO CHEMICAL COMPANY, LIMITED**
  **Tokyo 103-6020 (JP)**
- **Zeon Corporation**
  **Tokyo 100-8246 (JP)**

(72) Inventors:
- **OHNO, Keita**
  **Tokyo 100-8246 (JP)**
- **KANESAKA, Sho**
  **Ichihara-shi, Chiba 299-0195 (JP)**
- **ICHIMIYA, Yukari**
  **Tokyo 103-6020 (JP)**

(74) Representative: **Maiwald GmbH**
**Elisenhof**
**Elisenstraße 3**
**80335 München (DE)**

# (54) CONJUGATED-DIENE-BASED POLYMER, RUBBER COMPOSITION, CROSS-LINKED RUBBER OBJECT, AND TIRE

(57) Provided is a conjugated diene polymer containing at least conjugated diene monomer units, wherein the conjugated diene polymer contains 95 weight ppm or more of silicon and has an ionic strength index of 75% or less.

EP 4 230 433 A1

## Description

### TECHNICAL FIELD

The present invention relates to a conjugated diene polymer, a rubber composition, a cross-linked rubber, and a tire, and more specifically relates to a conjugated diene polymer which has high processability and can provide a cross-linked rubber having high wear resistance and excellent fuel efficiency, and a rubber composition, a cross-linked rubber, and a tire prepared using such a conjugated diene polymer.

### BACKGROUND ART

Due to recent increasing environmental concerns, a polymer for use in tires for automobiles which can provide excellent fuel efficiency is also required. Tires prepared from a rubber composition containing a conjugated diene polymer and silica as a filler have lower heat buildup than that of tires prepared from traditional rubber compositions containing carbon black, and thus have more excellent fuel efficiency.

As a conjugated diene polymer which is used to form such a tire, Patent Document 1 discloses a modified conjugated diene polymer satisfying the following conditions (1) to (4):

(1) The modified conjugated diene polymer has two or more peaks in a molecular weight distribution curve obtained in measurement by gel permeation chromatography (GPC).
(2) The molecular weight distribution curve contains a peak (A) of a peak molecular weight of 500000 to 2500000 and a peak (B) of a peak molecular weight of 150000 to 600000.
(3) The total of the area of the peak (A) and the of the peak (B) is 70% or more of the total area of the molecular weight distribution curve.
(4) An absolute value of the difference between the glass transition temperature (Tg(A)) of a conjugated diene polymer in the peak (A) and the glass transition temperature (Tg(B)) of a conjugated diene polymer in the peak (B) is 2°C to 30°C.

### RELATED ART DOCUMENTS

### PATENT DOCUMENT

Patent Document 1: WO 2018/147312

### SUMMARY OF THE INVENTION

### PROBLEM TO BE SOLVED BY THE INVENTION

The conjugated diene polymer prepared by the technique disclosed in Patent Document 1 has insufficient processability, and the cross-linked rubber prepared therefrom has wear resistance and fuel efficiency which are susceptible to improvement.

The present invention has been made in consideration of the above problems, and an object of the present invention is to provide a conjugated diene polymer which has high processability, and can provide a cross-linked rubber having high wear resistance and excellent fuel efficiency. Another object of the present invention is to provide a rubber composition, a cross-linked rubber, and a tire prepared from such a conjugated diene polymer.

### MEANS FOR SOLVING PROBLEMS

The present inventors, who have conducted extensive research to achieve the above object, have found that the above object can be achieved by achieving a conjugated diene polymer having a silicon content and an ionic strength index in specific ranges, and have completed the present invention.

Specifically, the present invention provides a conjugated diene polymer containing at least conjugated diene monomer units, wherein the conjugated diene polymer contains 95 weight ppm or more of silicon and has an ionic strength index of 75% or less.

Preferably, the conjugated diene polymer according to the present invention has a molecular weight distribution (Mw/Mn) of 1.5 or more.

Preferably, the conjugated diene polymer according to the present invention has a weight average molecular weight (Mw) of 200000 or more. Preferably, the conjugated diene polymer according to the present invention contains

150 weight ppm or more of silicon.

Preferably, the conjugated diene polymer according to the present invention has an ionic strength index of 0.5 to 60%.

Preferably, the conjugated diene polymer according to the present invention has a molecular weight distribution curve where two or more peaks are present.

Preferably, the conjugated diene polymer according to the present invention has a terminal modifying group.

The present invention provides a rubber composition comprising the conjugated diene polymer, and a filler.

The present invention provides a cross-linked rubber prepared by cross-linking the rubber composition, and a tire comprising such a cross-linked rubber.

EFFECTS OF INVENTION

The present invention provides a conjugated diene polymer which has high processability and can provide a cross-linked rubber having high wear resistance and excellent fuel efficiency. The present invention also provides a rubber composition, a cross-linked rubber, and a tire prepared from such a conjugated diene polymer.

DESCRIPTION OF EMBODIMENTS

<Conjugated diene polymer>

The conjugated diene polymer according to the present invention is a conjugated diene polymer containing at least conjugated diene monomer units, wherein the conjugated diene polymer contains 95 weight ppm or more of silicon and has an ionic strength index of 75% or less.

The conjugated diene polymer according to the present invention contains conjugated diene monomer units, and examples of conjugated diene monomers for forming conjugated diene monomer units include 1,3-butadiene, isoprene, 2,3-dimethyl-1,3-butadiene, 2-chloro-1,3-butadiene, 1,3-pentadiene, 1,3-hexadiene, and the like. Among these, preferred are 1,3-butadiene and isoprene, and more preferred is 1,3-butadiene. 1,3-Butadiene may be used in combination with isoprene.

The lower limit of the proportion of conjugated diene monomer units in the conjugated diene polymer according to the present invention is 0% by weight or more. From the viewpoint of wear resistance and fuel efficiency of a cross-linked rubber thereof, the lower limit of the proportion is preferably 20% by weight or more, more preferably 25% by weight or more, still more preferably 30% by weight or more, particularly preferably 40% by weight or more, most preferably 50% by weight or more in 100% by weight of the total amount of monomers. On the other hand, the upper limit of the proportion of conjugated diene monomer units is 100% by weight or less. From the viewpoint of processability of the conjugated diene polymer, a preferred upper limit is, in descending order of preference, 95% by weight or less, 90% by weight or less, 85% by weight or less, 80% by weight or less, 75% by weight or less, 70% by weight or less, 66% by weight or less, 64% by weight or less, 62% by weight or less, 60% by weight or less in 100% by weight of the total amount of monomers.

In the conjugated diene polymer according to the present invention, the vinyl bond content of the conjugated diene monomer units is preferably 1 to 90 mol%, more preferably 3 to 80 mol%, more preferably 5 to 70 mol%, still more preferably 7 to 60 mol%, particularly preferably 9 to 50 mol%, most preferably 10 to 40 mol%. By controlling the vinyl bond content of the conjugated diene monomer units within the ranges above, a cross-linked rubber having further enhanced fuel efficiency can be obtained.

The conjugated diene polymer according to the present invention is preferably a copolymer containing aromatic vinyl monomer units in addition to conjugated diene monomer units. Examples of aromatic vinyl monomers for forming aromatic vinyl monomer units include styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, vinylnaphthalene, and the like. Among these, styrene is preferred. The upper limit of the proportion of aromatic vinyl monomer units in the conjugated diene polymer is 0% by weight or more. From the viewpoint of the wear resistance and fuel efficiency of a cross-linked rubber thereof, the upper limit is preferably 80% by weight or less, more preferably 75% by weight or less, still more preferably 70% by weight or less, particularly preferably 60% by weight or less, most preferably 50% by weight or less in 100% by weight of the total amount of monomers. On the other hand, the lower limit of the proportion of aromatic vinyl monomer units is 0% by weight or more. From the viewpoint of the processability of the conjugated diene polymer, a preferred lower limit is, in descending order of preference, is 5% by weight or more, 10% by weight or more, 15% by weight or more, 20% by weight or more, 25% by weight or more, 30% by weight or more, 34% by weight or more, 36% by weight or more, 38% by weight or more, 40% by weight or more in 100% by weight of the total amount of monomers.

When the conjugated diene polymer according to the present invention contains aromatic vinyl monomer units,

the proportion of aromatic vinyl monomer blocks in the conjugated diene polymer according to the present invention is preferably 30.0% or less, more preferably 20.0% or less, still more preferably 10.0% or less, particularly preferably 5.0% or less. The proportion of aromatic vinyl monomer blocks is measured by $^1$H-NMR using deuterochloroform as a solvent. Here, in the obtained $^1$H-NMR spectrum, peaks from 6.1 to 7.7 ppm are defined as peaks derived from an aromatic vinyl monomer, and peaks from 6.1 to 6.88 ppm are defined as peaks derived from blocks of the aromatic vinyl monomer. The ratio of the peak area derived from the aromatic vinyl monomer blocks to that derived from the aromatic vinyl monomer is determined, and the value is multiplied by 2.5 and converted to a percentage to obtain the proportion of aromatic vinyl monomer blocks. When the aromatic vinyl monomer is styrene, it is preferred that the proportion of styrene blocks fall within the ranges above. By controlling the proportion of aromatic vinyl monomer blocks within the ranges above, a cross-linked rubber having highly balanced wear resistance and fuel efficiency can be obtained.

The proportion of aromatic vinyl monomer blocks can be controlled by adjusting the timings of adding the conjugated diene monomer and the aromatic vinyl monomer to the polymerization system. The conjugated diene monomer and the aromatic vinyl monomer can be added to the polymerization system at any timings irrespective of before or after addition of a polymerization initiator.

The conjugated diene polymer according to the present invention may also contain units of a vinyl compound having a functional group interactive with silica in addition to the conjugated diene monomer units and the aromatic vinyl monomer units optionally contained.

The vinyl compound having a functional group interactive with silica for forming units of a vinyl compound having functional group interactive with silica can be any compound having a functional group interactive with silica and a vinyl group, and is not particularly limited. Here, the functional group interactive with silica is a functional group which forms a covalent bond between the functional group and the silica surface or can cause an intermolecular force weaker than a covalent bond (such as ion-dipole interaction, dipole-dipole interaction, hydrogen bond, or van der Waals force). Examples of such a functional group interactive with silica include, but should not be limited to, nitrogen atom-containing functional groups, silicon atom-containing functional groups, oxygen atom-containing functional groups, and the like. Among these, preferred are silicon atom-containing functional groups because they are highly interactive with silica.

In a preferred embodiment of the vinyl compound having a functional group interactive with silica, the vinyl compound having a silicon atom-containing functional group which can be suitably used is, for example, a compound represented by General Formula (1) below:

[Chem. 1]

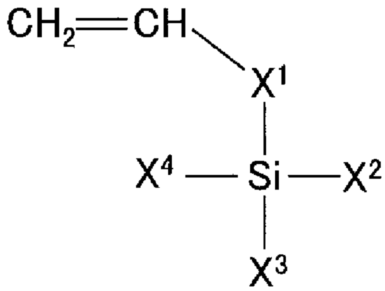

(1)

In General Formula (1) above, $X^1$ represents a chemical single bond or a hydrocarbylene group, and $X^2$, $X^3$, and $X^4$ each independently represent a substituted amino group, a hydrocarbyloxy group, or an optionally substituted hydrocarbyl group.

In General Formula (1) above, $X^1$ is a chemical single bond or a hydrocarbylene group, preferably a chemical single bond. Examples of the hydrocarbylene group include alkylene groups, alkenediyl groups, arylene groups, groups of arylene groups bonded to alkylene groups, and the like.

Examples of alkylene groups include a methylene group, an ethylene group, a trimethylene group, and the like. Examples of alkenediyl groups include a vinylene group, an ethylene-1,1-diyl group, and the like. Examples of arylene groups include a phenylene group, a naphthylene group, a biphenylene group, and the like. Examples of groups of arylene groups bonded to alkylene groups include a group of a phenylene group bonded to a methylene group, a group of a phenylene group bonded to an ethylene group, and the like. When $X^1$ is a hydrocarbylene group, $X^1$ is preferably an arylene group, more preferably a phenylene group.

In General Formula (1) above, $X^2$, $X^3$, and $X^4$ each independently represent a substituted amino group, a hydrocarbyloxy group, or an optionally substituted hydrocarbyl group. It is preferred that at least one of $X^2$, $X^3$, and $X^4$ be a substituted amino group, and it is more preferred that two of $X^2$, $X^3$, and $X^4$ be a substituted amino group.

A suitable substituted amino group which can form $X^2$, $X^3$, and $X^4$ is a group represented by General Formula (2) below:

$R^1$-N(-$R^2$)- (2)

In General Formula (2) above, $R^1$ and $R^2$ may or may not be bonded to each other; if $R^1$ and $R^2$ are not bonded to each other, $R^1$ and $R^2$ each independently represent an optionally substituted hydrocarbyl group or a trihydrocarbylsilyl group; and if $R^1$ and $R^2$ are bonded to each other, $R^1$ and $R^2$ represent a hydrocarbylene group optionally containing at least one species selected from the group consisting of nitrogen, oxygen, sulfur, and silicon atoms.

Examples of a hydrocarbyl group which can form $R^1$ and $R^2$ include linear alkyl groups such as a methyl group, an ethyl group, an n-propyl group, an isopropyl group, an n-butyl group, an isobutyl group, a sec-butyl group, a tert-butyl group, an n-pentyl group, an n-hexyl group, and an n-octyl group; cyclic alkyl groups such as a cyclopentyl group and a cyclohexyl group; aryl groups such as a phenyl group, a benzyl group, and a naphthyl group; and the like. Among these, preferred are linear alkyl groups, and more preferred is a methyl group or an ethyl group.

If the hydrocarbyl group which can form $R^1$ and $R^2$ has a substituent, examples thereof include hydrocarbyl groups having a hydrocarbyloxy group as a substituent, and the like. Examples of a hydrocarbyl group having a hydrocarbyloxy group as a substituent include alkoxyalkyl groups such as a methoxymethyl group, an ethoxymethyl group, and a methoxyethyl group; aryloxyalkyl groups such as a phenoxymethyl group; and the like.

Specific examples of a trihydrocarbylsilyl group which can form $R^1$ and $R^2$ include trialkylsilyl groups such as a trimethylsilyl group, a triethylsilyl group, and a tert-butyldimethylsilyl group, and the like.

If $R^1$ and $R^2$ are bonded to each other, examples of the hydrocarbylene group which can form $R^1$ and $R^2$ include alkylene groups such as a trimethylene group, a tetramethylene group, a pentamethylene group, a hexamethylene group, a heptamethylene group, an octamethylene group, a decamethylene group, a dodecamethylene group, and a 2,2,4-trimethylhexane-1,6-diyl group; alkenediyl groups such as a pentan-2-ene-1,5-diyl group; and the like. If the hydrocarbylene group which can form $R^1$ and $R^2$ contains at least one species selected from the group consisting of nitrogen, oxygen, sulfur, and silicon atoms, examples of the hydrocarbylene group containing at least one species selected from the group consisting of nitrogen, oxygen, sulfur, and silicon atoms include a group represented by -CH=N-CH=CH-, a group represented by $-CH=N-CH_2-CH_2-$, a group represented by $-CH_2-CH_2-O-CH_2-CH_2-$, a group represented by $-CH_2-CH_2-S-CH_2-CH_2-$, a group represented by $-CH_2-CH_2-SiH_2-CH_2-CH_2-$, a group represented by $-CH_2-CH_2-SiMe_2-CH_2-CH_2-$, a group represented by $-CH_2-CH_2-SiEt_2-CH_2-CH_2-$, and the like.

Preferably, $R^1$ and $R^2$ are alkyl groups or are bonded to form an alkylene group. More preferably, $R^1$ and $R^2$ are alkyl groups. Still more preferably, $R^1$ and $R^2$ are a methyl group or an ethyl group.

When $R^1$ and $R^2$ in General Formula (2) above are hydrocarbyl groups, specific examples of groups represented by General Formula (2) above include dialkylamino groups such as a dimethylamino group, a diethylamino group, an ethylmethylamino group, a di-n-propylamino group, a diisopropylamino group, a di-n-butylamino group, a diisobutylamino group, a di-sec-butylamino group, and a di-tert-butylamino group; diarylamino groups such as a diphenylamino group; and the like. Among these, preferred are dialkylamino groups, and more preferred are a dimethylamino group, a diethylamino group, and a di-n-butylamino group.

In General Formula (2) above, if $R^1$ and $R^2$ each are a hydrocarbyl group having a hydrocarbyloxy group as a substituent, specific examples of the group represented by General Formula (2) above include di(alkoxyalkyl)amino groups such as a di(methoxymethyl)amino group and a di(ethoxymethyl)amino group, and the like.

If $R^1$ and $R^2$ in General Formula (2) above are trihydrocarbylsilyl groups, specific examples of the group represented by General Formula (2) above include trialkylsilyl group-containing amino groups such as a bis(trimethylsilyl)amino group, a bis(tert-butyldimethylsilyl)amino group, and an N-trimethylsilyl-N-methylamino group, and the like.

If $R^1$ and $R^2$ in General Formula (2) above are bonded to each other to form a hydrocarbylene group, specific examples of the group represented by General Formula (2) above include 1-alkyleneimino groups such as a 1-trimethyleneimino group, a 1-pyrrolidino group, a 1-piperidino group, a 1-hexamethyleneimino group, a 1-heptamethyleneimino group, a 1-octamethyleneimino group, a 1-decamethyleneimino group, and a 1-dodecamethyleneimino group, and the like.

If $R^1$ and $R^2$ in General Formula (2) above are bonded to form a hydrocarbylene group containing a nitrogen atom and/or an oxygen atom, specific examples of the group represented by General Formula (2) above include a 1-imidazolyl group, a 4,5-dihydro-1-imidazolyl group, a morpholino group, and the like.

The group represented by General Formula (2) above is preferably a dialkylamino group or a 1-alkyleneimino group. More preferred are dialkylamino groups, and still more preferred are a dimethylamino group, a diethylamino group, and a di-n-butylamino group.

Examples of the hydrocarbyloxy group which can form $X^2$, $X^3$, and $X^4$ in General Formula (1) above include alkoxy groups such as a methoxy group, an ethoxy group, an n-propoxy group, an isopropoxy group, an n-butoxy group, a sec-butoxy group, and a tert-butoxy group; aryloxy groups such as a phenoxy group and a benzyloxy group; and the like.

Examples of the hydrocarbyl group which can form $X^2$, $X^3$, and $X^4$ in General Formula (1) above include alkyl groups such as a methyl group, an ethyl group, an n-propyl group, an isopropyl group, an n-butyl group, a sec-butyl

group, and a tert-butyl group; aryl groups such as a phenyl group, a 4-methyl-1-phenyl group, and a benzyl group; and the like.

If the hydrocarbyl group which can form $X^2$, $X^3$, and $X^4$ has a substituent, examples thereof include hydrocarbyl groups having a hydrocarbyloxy group as a substituent. Examples thereof include alkoxyalkyl groups such as a methoxymethyl group, an ethoxymethyl group, an ethoxyethyl group, and the like.

If in General Formula (1) above, $X^1$ is a chemical single bond and one of $X^2$, $X^3$, and $X^4$ is a substituted amino group, specific examples of the vinyl compound having a silicon atom-containing functional group represented by General Formula (1) above include (dialkylamino)dialkylvinylsilanes such as (dimethylamino)dimethylvinylsilane, (ethylmethylamino)dimethylvinylsilane, (di-n-propylamino)dimethylvinylsilane, (diisopropylamino)dimethylvinylsilane, (dimethylamino)diethylvinylsilane, (ethylmethylamino)diethylvinylsilane, (di-n-propylamino)diethylvinylsilane, and (diisopropylamino)diethylvinylsilane; [bis(trialkylsilyl)amino]dialkylvinylsilanes such as [bis(trimethylsilyl)amino] dimethyl vinylsilane, [bis(t-butyldimethylsilyl)amino]dimethylvinylsilane, [bis(trimethylsilyl) amino]diethylvinylsilane, and [bis(t-butyldimethylsilyl)amino]diethylvinylsilane; (dialkylamino)di(alkoxyalkyl)vinylsilanes such as (dimethylamino)di(methoxymethyl)vinylsilane, (dimethylamino)di(methoxyethyl)vinylsilane, (dimethylamino)di(ethoxymethyl)vinylsilane, (dimethylamino)di(ethoxyethyl)vinylsilane, (diethylamino)di(methoxymethyl)vinylsilane, (diethylamino)di(methoxyethyl)vinylsilane, (diethylamino)di(ethoxymethyl)vinylsilane, and (diethylamino)di(ethoxyethyl)vinylsilane; cyclic aminodialkylvinylsilane compounds such as pyrrolidinodimethylvinylsilane, piperidinodimethylvinylsilane, hexamethyleneiminodimethylvinylsilane, 4,5-dihydroimidazolyldimethylvinylsilane, and morpholinodimethylvinylsilane; and the like.

If in General Formula (1) above, $X^1$ is a hydrocarbylene group and one of $X^2$, $X^3$, and $X^4$ is a substituted amino group, specific examples of the vinyl compound having a silicon atom-containing functional group represented by General Formula (1) above include (dialkylamino)dialkylvinylphenylsilanes such as (dimethylamino)dimethyl-4-vinylphenylsilane, (dimethylamino)dimethyl-3-vinylphenylsilane, (diethylamino)dimethyl-4-vinylphenylsilane, (diethylamino)dimethyl-3-vinylphenylsilane, (di-n-propylamino)dimethyl-4-vinylphenylsilane, (di-n-propylamino)dimethyl-3-vinylphenylsilane, (di-n-butylamino)dimethyl-4-vinylphenylsilane, (di-n-butylamino)dimethyl-3-vinylphenylsilane, (dimethylamino)diethyl-4-vinylphenylsilane, (dimethylamino)diethyl-3-vinylphenylsilane, (diethylamino)diethyl-4-vinylphenylsilane, (diethylamino)diethyl-3-vinylphenylsilane, (di-n-propylamino)diethyl-4-vinylphenylsilane, (di-n-propylamino)diethyl-3-vinylphenylsilane, (di-n-butylamino)diethyl-4-vinylphenylsilane, and (di-n-butylamino)diethyl-3-vinylphenylsilane; and the like.

If in General Formula (1) above, $X^1$ is a chemical single bond and two of $X^2$, $X^3$, and $X^4$ are substituted amino groups, specific examples of the vinyl compound containing a silicon atom-containing functional group represented by General Formula (1) above include bis(dialkylamino)alkylvinylsilanes such as bis(dimethylamino)methylvinylsilane, bis(diethylamino)methylvinylsilane, bis(di-n-propylamino)methylvinylsilane, bis(di-n-butylamino)methylvinylsilane, bis(dimethylamino)ethylvinylsilane, bis(diethylamino)ethylvinylsilane, bis(di-n-propylamino)ethylvinylsilane, and bis(di-n-butylamino)ethylvinylsilane; bis[bis(trialkylsilyl)amino]alkylvinylsilanes such as bis[bis(trimethylsilyl)amino]methylvinylsilane, bis[bis(tert-butyldimethylsilyl)amino]methylvinylsilane, bis[bis(trimethylsilyl)amino]ethylvinylsilane, and bis[bis(tert-butyldimethylsilyl)amino]ethylvinylsilane; bis(dialkylamino)alkoxyalkylsilanes such as bis(dimethylamino)methoxymethylvinylsilane, bis(dimethylamino)methoxyethylvinylsilane, bis(dimethylamino)ethoxymethylvinylsilane, bis(dimethylamino)ethoxyethylvinylsilane, bis(diethylamino)methoxymethylvinylsilane, bis(diethylamino)methoxyethylvinylsilane, bis(diethylamino)ethoxymethylvinylsilane, and bis(dimethylamino)ethoxyethylvinylsilane; bis(cyclic amino)alkylvinylsilane compounds such as bis(pyrrolidino)methylvinylsilane, bis(piperidino)methylvinylsilane, bis(hexamethyleneimino)methylvinylsilane, bis(4,5-dihydroimidazolyl)methylvinylsilane, and bis(morpholino)methylvinylsilane; and the like.

If in General Formula (1) above, $X^1$ is a hydrocarbylene group and two of $X^2$, $X^3$, and $X^4$ are substituted amino groups, specific examples of the vinyl compound having a silicon atom-containing functional group represented by General Formula (1) above include bis(dialkylamino)alkylvinylphenylsilanes such as bis(dimethylamino)methyl-4-vinylphenylsilane, bis(dimethylamino)methyl-3-vinylphenylsilane, bis(diethylamino)methyl-4-vinylphenylsilane, bis(diethylamino)methyl-3-vinylphenylsilane, bis(di-n-propylamino)methyl-4-vinylphenylsilane, bis(di-n-propylamino)methyl-3-vinylphenylsilane, bis(di-n-butylamino)methyl-4-vinylphenylsilane, bis(di-n-butylamino)methyl-3-vinylphenylsilane, bis(dimethylamino)ethyl-4-vinylphenylsilane, bis(dimethylamino)ethyl-3-vinylphenylsilane, bis(diethylamino)ethyl-4-vinylphenylsilane, bis(diethylamino)ethyl-3-vinylphenylsilane, bis(di-n-propylamino)ethyl-4-vinylphenylsilane, bis(di-n-propylamino)ethyl-3-vinylphenylsilane, bis(di-n-butylamino)ethyl-4-vinylphenylsilane, and bis(di-n-butylamino)ethyl-3-vinylphenylsilane, and the like.

If in General Formula (1) above, $X^1$ is a chemical single bond and three of $X^2$, $X^3$, and $X^4$ are substituted amino groups, specific examples of the vinyl compound having a silicon atom-containing functional group represented by General Formula (1) above include tris(dialkylamino)vinylsilanes such as tris(dimethylamino)vinylsilane, tris(diethylamino)vinylsilane, tris(di-n-propylamino)vinylsilane, and tris(di-n-butylamino)vinylsilane, and the like.

If in General Formula (1) above, $X^1$ is a hydrocarbylene group and three of $X^2$, $X^3$, and $X^4$ are substituted amino groups, specific examples of the vinyl compound having silicon atom-containing functional group represented by General Formula (1) above include tris(dialkylamino)vinylphenylsilanes such as tris(dimethylamino)-4-vinylphenylsilane,

tris(dimethylamino)-3-vinylphenylsilane, tris(diethylamino)-4-vinylphenylsilane, tris(diethylamino)-3-vinylphenylsilane, tris(di-n-propylamino)-4-vinylphenylsilane, tris(di-n-propylamino)-3-vinylphenylsilane, tris(di-n-butylamino)-4-vinylphenylsilane, and tris(di-n-butylamino)-3-vinylphenylsilane.

If in General Formula (1) above, $X^1$ is a chemical single bond and all of $X^2$, $X^3$, and $X^4$ are not substituted amino groups, specific examples of the vinyl compound having a silicon atom-containing functional group represented by General Formula (1) above include trialkoxyvinylsilanes such as trimethoxyvinylsilane, triethoxyvinylsilane, and tripropoxyvinylsilane; dialkoxyalkylvinylsilanes such as methyldimethoxyvinylsilane and methyldiethoxyvinylsilane; dialkoxyarylvinylsilanes such as di(tert-pentoxy)phenylvinylsilane and di(tert-butoxy)phenylvinylsilane; monoalkoxydialkylvinylsilanes such as dimethylmethoxyvinylsilane; monoalkoxydiarylvinylsilanes such as tert-butoxydiphenylvinylsilane and tert-pentoxydiphenylvinylsilane; monoalkoxyalkylarylvinylsilanes such as tert-butoxymethylphenylvinylsilane and tert-butoxyethylphenylvinylsilane; substituted alkoxyvinylsilane compounds such as tris(β-methoxyethoxy)vinylsilane; and the like.

Among these compounds represented by General Formula (1) above, preferred are those where $X^1$ is a chemical single bond, more preferred are those where $X^1$ is a chemical single bond and two of $X^2$, $X^3$, and $X^4$ are substituted amino groups, and particularly preferred are those where $X^1$ is a chemical single bond and two of $X^2$, $X^3$, and $X^4$ are dialkylamino groups.

Among these compounds represented by General Formula (1) above, preferred are bis(dimethylamino)methylvinylsilane, bis(diethylamino)methylvinylsilane, and bis(di-n-butylamino)methylvinylsilane, and particularly preferred is bis(diethylamino)methylvinylsilane.

Examples of vinyl compounds having a functional group interactive with silica other than the compound represented by General Formula (1) above include bis(trialkylsilyl)aminostyrenes such as 4-N,N-bis(trimethylsilyl)aminostyrene and 3-N,N-bis(trimethylsilyl)aminostyrene; bis(trialkylsilyl)aminoalkylstyrenes such as 4-bis(trimethylsilyl)aminomethylstyrene, 3-bis(trimethylsilyl)aminomethylstyrene, 4-bis(trimethylsilyl)aminoethylstyrene, and 3-bis(trimethylsilyl)aminoethylstyrene; and the like.

When the compound represented by General Formula (1) above is used as the vinyl compound having a functional group interactive with silica, the conjugated diene-based polymer according to the present invention includes units represented by General Formula (3) below as the units of the vinyl compound having a functional group interactive with silica:

[Chem. 2]

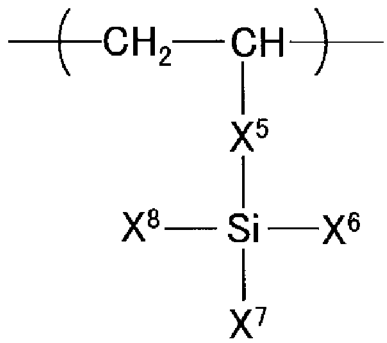

(3)

In General Formula (3) above, $X^5$ represents a chemical single bond or a hydrocarbylene group, and $X^6$, $X^7$, and $X^8$ each independently represent a hydroxyl group, a substituted amino group, a hydrocarbyloxy group, or an optionally substituted hydrocarbyl group.

In the unit represented by General Formula (3) above, $X^5$ corresponds to $X^1$ in the compound represented by General Formula (1) above, and $X^6$, $X^7$, and $X^8$ correspond to $X^2$, $X^3$, and $X^4$ in the compound represented by General Formula (1) above. For this reason, $X^5$, $X^6$, $X^7$, and $X^8$ in the unit represented by General Formula (3) above can be the same as those listed for $X^1$, $X^2$, $X^3$, and $X^4$ in the compound represented by General Formula (1) above. When the compound represented by General Formula (1) above where at least one of $X^2$, $X^3$, and $X^4$ is a substituted amino group or a hydrocarbyloxy group is used, at least one of $X^2$, $X^3$, and $X^4$ can be converted into a hydroxyl group as a result of hydrolysis of the substituted amino group or the hydrocarbyloxy group at any timing in any step.

The proportion of units of a vinyl compound containing a functional group interactive with silica contained in the conjugated diene polymer according to the present invention is preferably 0 to 10.000% by weight, more preferably 0.001 to 3.000% by weight, still more preferably 0.002 to 1.000% by weight relative to 100% by weight of the total amount of monomer units. By controlling the proportion of units of a vinyl compound containing a functional group interactive with silica within the ranges above, the processability of the conjugated diene polymer and the wear resistance and fuel

efficiency of a cross-linked rubber thereof can be further enhanced in a good balance.

The conjugated diene polymer according to the present invention may also contain different monomer units other than the conjugated diene monomer units, and the aromatic vinyl monomer units and monomer units of the vinyl compound having a functional group interactive with silica which are contained as needed. Examples of a different compound forming such different monomer units include linear olefin compounds such as ethylene, propylene, and 1-butene; cyclic olefin compounds such as cyclopentene and 2-norbornene; non-conjugated diene compounds such as 1,5-hexadiene, 1,6-heptadiene, 1,7-octadiene, dicyclopentadiene, and 5-ethylidene-2-norbornene; and the like.

In the conjugated diene polymer according to the present invention, the bonding form of the monomers can be a variety of bonding forms such as a block form, a tapered form, and a random form, and preferred is a random form. When the random form is selected, a cross-linked rubber having further enhanced fuel efficiency can be obtained.

The conjugated diene polymer according to the present invention preferably has a modifying group, and more preferably has a modifying group (terminal modifying group) formed by modifying a terminal of the polymer chain of the conjugated diene polymer with a modifier. In this specification, the "conjugated diene polymer having a modifying group" is one at least part of polymer chains forming the conjugated diene polymer has a modifying group. In other words, part of polymer chains forming the conjugated diene polymer need not have a modifying group.

A preferred modifying group has a functional group interactive with silica because it can appropriately enhance the compatibility with a filler such as silica and a cross-linked rubber having further enhanced wear resistance and fuel efficiency can be obtained. Here, the functional group interactive with silica is a functional group which forms a covalent bond between the functional group and the silica surface or can cause an intermolecular force weaker than the covalent bond (such as ion-dipole interaction, dipole-dipole interaction, hydrogen bond, or van der Waals force). Preferred interaction formed between silica and the functional group is a covalent bond or an intermolecular force weaker than the covalent bond (such as ion-dipole interaction, dipole-dipole interaction, hydrogen bond, or van der Waals force). From the viewpoint of ease in control of the ionic strength index within a suitable range, a weak intermolecular force (such as ion-dipole interaction, dipole-dipole interaction, hydrogen bond, or van der Waals force) is more preferred. Examples of such a functional group interactive with silica include, but should not be limited to, nitrogen atom-containing functional groups, silicon atom-containing functional groups, oxygen atom-containing functional groups, and the like.

Preferred modifiers for forming the modifying group are silicon atom-containing modifiers having a silicon atom-containing functional group and nitrogen atom-containing modifiers having a nitrogen atom-containing functional group, and more preferred modifiers are silicon atom-containing modifiers because of their high interaction with silica. Examples of silicon atom-containing modifiers include siloxane compounds, hydrocarbyloxysilane compounds, and the like. Examples of nitrogen atom-containing modifiers include N,N-di-substituted aminoalkyl(meth)acrylamides such as dimethylaminoethylacrylamide, diethylaminoethylacrylamide, dimethylaminopropylacrylamide, diethylaminopropylacrylamide, dimethylaminobutylacrylamide, diethylaminobutylacrylamide, dimethylaminoethylmethacrylamide, diethylaminoethylmethacrylamide, dimethylaminopropylmethacrylamide, diethylaminopropylmethacrylamide, dimethylaminobutylmethacrylamide, and diethylaminobutylmethacrylamide; amino group-containing alkoxysilane compounds such as [3-(dimethylamino)propyl]trimethoxysilane, [3-(diethylamino)propyl]trimethoxysilane, [3-(dimethylamino)propyl]triethoxysilane, [3-(diethylamino)propyl]triethoxysilane, [3-(ethylmethylamino)propyl]trimethoxysilane, and [3-(ethylmethylamino)propyl]triethoxysilane; and pyrrolidone-based compounds such as N-phenyl-2-pyrrolidone, N-methyl-2-pyrrolidone, N-ethyl-2-pyrrolidone, and 1-cyclohexyl-2-pyrrolidone.

The siloxane compounds are those having a siloxane structure (-Si-O-) as the main chain structure, and are not particularly limited. Preferred are organosiloxanes having an organic group in a side chain, and more preferred is a polyorganosiloxane represented by General Formula (4) below:

[Chem. 3]

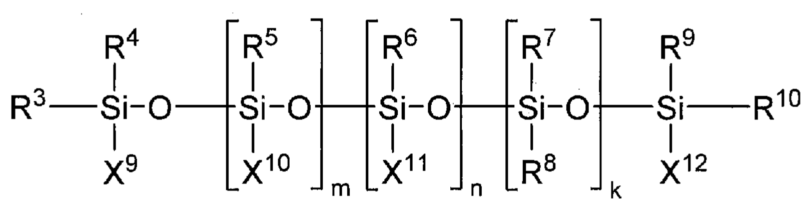

(4)

In General Formula (4) above, $R^3$ to $R^{10}$ are each a $C_1$ to $C_6$ alkyl group or a $C_6$ to $C_{12}$ aryl group, and may be the same or different. $X^9$ and $X^{12}$ are each one group selected from the group consisting of $C_1$ to $C_6$ alkyl groups, $C_6$ to $C_{12}$ aryl groups, $C_1$ to $C_5$ alkoxy groups, and $C_4$ to $C_{12}$ groups having an epoxy group. These may be the same or different. $X^{10}$ is a $C_1$ to $C_5$ alkoxy group or a $C_4$ to $C_{12}$ group having an epoxy group. When a plurality of $X^{10}$s is present, these may be the same or different. $X^{11}$ is a group having 2 to 20 repeating units of an alkylene glycol. When a plurality of $X^{11}$s is present, these may be the same or different. m is an integer of 0 to 200, n is an integer of 0 to 200,

k is an integer of 0 to 200, and m+n+k is 1 or more.

In the polyorganosiloxane represented by General Formula (4) above, examples of the $C_1$ to $C_6$ alkyl groups which can form $R^3$ to $R^{10}$, $X^9$, and $X^{12}$ in General Formula (4) above include a methyl group, an ethyl group, an n-propyl group, an isopropyl group, a butyl group, a pentyl group, a hexyl group, a cyclohexyl group, and the like. Examples of the $C_6$ to $C_{12}$ aryl groups include a phenyl group, a methylphenyl group, and the like. Among these, preferred are methyl and ethyl groups from the viewpoint of readiness of the production of the polyorganosiloxane itself.

In the polyorganosiloxane represented by General Formula (4) above, examples of the $C_1$ to $C_5$ alkoxy groups which can form $X^9$, $X^{10}$, and $X^{12}$ include a methoxy group, an ethoxy group, a propoxy group, an isopropoxy group, a butoxy group, and the like. Among these, preferred are methoxy and ethoxy groups from the viewpoint of readiness of the production of the polyorganosiloxane itself.

Furthermore, in the polyorganosiloxane represented by General Formula (4) above, examples of the $C_4$ to $C_{12}$ groups having an epoxy group which can form $X^9$, $X^{10}$, and $X^{12}$ include groups represented by General Formula (5) below:

$$-Z^1-Z^2-E^1 \qquad (5)$$

In General Formula (5) above, $Z^1$ is a $C_1$ to $C_{10}$ alkylene or alkylarylene group, $Z^2$ is a methylene group, a sulfur atom, or an oxygen atom, and $E^1$ is a $C_2$ to $C_{10}$ hydrocarbon group having an epoxy group.

The group represented by General Formula (5) above is preferably those where $Z^2$ is an oxygen atom, more preferably those where $Z^2$ is an oxygen atom and $E^1$ is a glycidyl group, particularly preferably those where $Z^1$ is a $C_1$ to $C_3$ alkylene group, $Z^2$ is an oxygen atom, and $E^1$ is a glycidyl group.

In the polyorganosiloxane represented by General Formula (4) above, $X^9$ and $X^{12}$ are preferably a $C_4$ to $C_{12}$ group having an epoxy group or a $C_1$ to $C_6$ alkyl group among the groups described above. $X^{10}$ is preferably a $C_4$ to $C_{12}$ group having an epoxy group among the groups described above. Furthermore, it is more preferred that $X^9$ and $X^{12}$ be $C_1$ to $C_6$ alkyl groups and $X^{10}$ be a $C_4$ to $C_{12}$ group having an epoxy group.

In the polyorganosiloxane represented by General Formula (4) above, $X^{11}$, namely, the group containing 2 to 20 repeating units of an alkylene glycol is preferably a group represented by General Formula (6) below:

[Chem. 4]

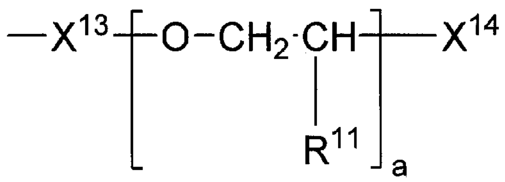

(6)

In General Formula (6) above, a is an integer of 2 to 20, $X^{13}$ is a $C_2$ to $C_{10}$ alkylene or alkylarylene group, $R^{11}$ is a hydrogen atom or a methyl group, and $X^{14}$ is a $C_1$ to $C_{10}$ alkoxy or aryloxy group. Among these, preferred groups are those where a is an integer of 2 to 8, $X^{13}$ is a $C_3$ alkylene group, $R^{11}$ is a hydrogen atom, and $X^{14}$ is a methoxy group.

In the polyorganosiloxane represented by General Formula (4) above, m is an integer of 0 to 200, preferably 20 to 150, more preferably 30 to 120. With m of 200 or less, the polyorganosiloxane itself represented by General Formula (4) above can be more readily produced, and can be more easily handled because the viscosity is not excessively high.

In the polyorganosiloxane represented by General Formula (4) above, n is an integer of 0 to 200, preferably 0 to 150, more preferably 0 to 120. k is an integer of 0 to 200, preferably 0 to 150, more preferably 0 to 130. The total numeric value of m, n, and k is 1 or more, preferably 2 to 400, more preferably 20 to 300, particularly preferably 30 to 250. If the total numeric value of m, n, and k is 1 or more, in the production process of the conjugated diene polymer, the reaction of the polyorganosiloxane represented by General Formula (4) above with an active terminal of the conjugated diene polymer readily proceeds. Furthermore, if the total numeric value of m, n, and k is 400 or less, the polyorganosiloxane itself represented by General Formula (4) above can be more readily produced, and can be more easily handled because the viscosity is not excessively high.

The hydrocarbyloxysilane compound is a silicon-containing compound having at least one hydrocarbyloxy group. The hydrocarbyloxysilane compound is preferably a compound having a hydrocarbyloxy group and at least one group containing a nitrogen atom. More preferably, such a group containing a nitrogen atom is a group containing a primary amino group having active hydrogen atoms and/or a secondary amino group having an active hydrogen atom.

Such a hydrocarbyloxysilane compound is not particularly limited, and a compound represented by General Formula (7) below can be suitably used.

[Chem. 5]

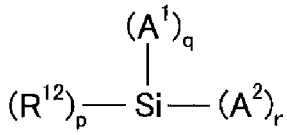

(7)

In General Formula (7) above, $R^{12}$ is a hydrocarbyl group, $A^1$ is a hydrocarbyloxy group, $A^2$ is a group containing a nitrogen atom, p is an integer of 0 to 2, q is an integer of 1 to 3, r is an integer of 1 to 3, and p+q+r=4.

$R^{12}$ in General Formula (7) above is a hydrocarbyl group, and examples thereof include alkyl groups, cycloalkyl groups, alkenyl groups, aryl groups, aralkyl groups, and the like. Preferred are $C_1$ to $C_6$ alkyl groups. Examples of $C_1$ to $C_6$ alkyl groups include a methyl group, an ethyl group, an n-propyl group, an isopropyl group, a butyl group, a pentyl group, a hexyl group, and the like. Among these, more preferred are a methyl group and an ethyl group.

$A^1$ in General Formula (7) above is an hydrocarbyloxy group, and examples thereof include alkoxy groups such as a methoxy group, an ethoxy group, an n-propoxy group, an isopropoxy group, an n-butoxy group, an isobutoxy group, a sec-butoxy group, and a tert-butoxy group; alkenyloxy groups such as a vinyloxy group and an allyloxy group; aryloxy groups such as a phenoxy group and a naphthoxy group; aralkyloxy groups such as a benzyloxy group; and the like. Among these, preferred are alkoxy groups and aryloxy groups, more preferred are alkoxy groups, and particularly preferred are a methoxy group and an ethoxy group from the viewpoint of reactivity.

$A^2$ in General Formula (7) above is a group containing a nitrogen atom, and can be any group as long as it contains a nitrogen atom. Preferred are organic groups containing a nitrogen atom, and examples thereof include a 3-aminopropyl group, a 4-aminobutyl group, a 3-(2-aminoethylamino)propyl group, a 2-dimethylaminoethyl group, a 3-dimethylaminopropyl group, a 3-diethylaminopropyl group, a 3-dipropylaminopropyl group, a 3-dibutylaminopropyl group, a 3-phenylmethylaminopropyl group, a 3-(4-methylpiperazinyl)propyl group, an N,N-bis(trimethylsilyl)aminopropyl group, an N,N-bis(triethylsilyl)aminopropyl group, an N,N',N'-tris(trimethylsilyl)-N-(2-aminoethyl)-3-aminopropyl group, and the like. Among these, preferred are groups containing a primary amino group having active hydrogen atoms and/or a secondary amino group having a active hydrogen atom, such as a 3-aminopropyl group, a 4-aminobutyl group, and a 3-(2-aminoethylamino)propyl group, because a cross-linked rubber having further improved low heat buildup and wet grip properties can be obtained. The term "active hydrogen atom" indicates a hydrogen atom bonded to an atom other than a carbon atom, and preferably has bond energy lower than that of the carbon-hydrogen bonds of a polymethylene chain.

In the compound represented by General Formula (7) above, p is an integer of 0 to 2, q is an integer of 1 to 3, r is an integer of 1 to 3, and p+q+r=4. From the viewpoint of the reactivity with polymer chains having an active terminal or reaction residues formed through a reaction between polymer chains having an active terminal and a siloxane compound, it is preferred that p be an integer of 0 to 1, q be an integer of 2 to 3, and r be an integer of 1 to 2, and it is more preferred that p=0, q=3, and r=1. When p is 2, two groups represented by $R^{12}$ contained in one molecule of the compound represented by General Formula (7) above may be the same or different. Similarly, when q is 2 or 3, a plurality of groups represented by $A^1$ contained in one molecule of the compound represented by General Formula (7) above may be the same or different. When r is 2 or 3, a plurality of groups represented by $A^2$ contained in one molecule of the compound represented by General Formula (7) above may be the same or different.

Specific examples of the compound represented by General Formula (7) above include, but should not be limited to, the followings: Examples of compounds where $A^2$ in General Formula (7) above is a group containing a primary amino group having active hydrogen atoms and/or a secondary amino group having an active hydrogen atom include compounds having a 3-aminopropyl group as $A^2$, such as 3-aminopropyldimethylmethoxysilane, 3-aminopropylmethyldimethoxysilane, 3-aminopropyltrimethoxysilane, 3-aminopropyldimethylethoxysilane, 3-aminopropylmethyldiethoxysilane, and 3-aminopropyltriethoxysilane; compounds having a 4-aminobutyl group as $A^2$, such as 4-aminobutyldimethylmethoxysilane, 4-aminobutylmethyldimethoxysilane, 4-aminobutyltrimethoxysilane, 4-aminobutyldimethylethoxysilane, 4-aminobutylmethyldiethoxysilane, and 4-aminobutyltriethoxysilane; compounds having a 3- (2-aminoethylamino) propyl group as $A^2$, such as 3-(2-aminoethylamino)propyldimethylmethoxysilane, 3-(2-aminoethylamino)propylmethyldimethoxysilane, 3-(2-aminoethylamino)propyltrimethoxysilane, 3-(2-aminoethylamino)propyldimethylethoxysilane, 3-(2-aminoethylamino)propylmethyldiethoxysilane, 3-(2-aminoethylamino)propyltriethoxysilane; and the like. Among these, preferred are compounds having a 3-(2-aminoethylamino)propyl group as $A^2$, and more preferred is 3-(2-aminoethylamino)propyltrimethoxysilane.

Examples of compounds where $A^2$ in General Formula (7) above is a group other than a group containing a primary amino group having active hydrogen atoms and/or a secondary amino group having an active hydrogen atom include compounds having a 3-dimethylaminopropyl group as $A^2$, such as 3-dimethylaminopropyltrimethoxysilane, 3-dimethylaminopropylmethyldimethoxysilane, 3-dimethylaminopropyldimethylmethoxysilane, 3-dimethylaminopropyltriethoxysilane, 3-dimethylaminopropylmethyldiethoxysilane, and 3-dimethylaminopropyldimethylethoxysilane; compounds having a 3-diethylaminopropyl group as $A^2$, such as [3-(diethylamino)propyl]trimethoxysilane, 3-diethylaminopropylmethyldimethoxysilane, 3-diethylaminopropyldimethylmethoxysilane, 3-diethylaminopropyltriethoxysilane, 3-diethylaminopropylmethyldiethoxysilane, and 3-diethylaminopropyldimethylethoxysilane; compounds having a 3-dipropylaminopropyl group as $A^2$, such as 3-dipropylaminopropyltrimethoxysilane, 3-dipropylaminopropylmethyldimethoxysilane, 3-dipropylaminopropyldimethylmethoxysilane, 3-dipropylaminopropyltriethoxysilane, 3-dipropylaminopropylmethyldiethoxysilane, and 3-dipropylaminopropyldimethylethoxysilane; compounds having a 3-dibutylaminopropyl group as $A^2$, such as 3-dibutylaminopropyltrimethoxysilane, 3-dibutylaminopropylmethyldimethoxysilane, 3-dibutylaminopropyldimethylmethoxysilane, 3-dibutylaminopropyltriethoxysilane, 3-dibutylaminopropylmethyldiethoxysilane, and 3-dibutylaminopropyldimethylethoxysilane; compounds having a 3-phenylmethylaminopropyl group as $A^2$, such as 3-phenylmethylaminopropyltrimethoxysilane, 3-phenylmethylaminopropylmethyldimethoxysilane, 3-phenylmethylaminopropyldimethylmethoxysilane, 3-phenylmethylaminopropyltriethoxysilane, 3-phenylmethylaminopropylmethyldiethoxysilane, and 3-phenylmethylaminopropyldimethylethoxysilane; compounds having a 3-(4-methylpiperazinyl) propyl group as $A^2$, such as 3-(4-methylpiperazinyl)propyltrimethoxysilane, 3-(4-methylpiperazinyl)propylmethyldimethoxysilane, 3-(4-methylpiperazinyl)propyldimethylmethoxysilane, 3-(4-methylpiperazinyl)propyltriethoxysilane, 3-(4-methylpiperazinyl)propylmethyldiethoxysilane, and 3-(4-methylpiperazinyl)propyldimethylethoxysilane;

compounds having an N,N-bis(trimethylsilyl)aminopropyl group as $A^2$, such as N,N-bis(trimethylsilyl)aminopropyltrimethoxysilane, N,N-bis(trimethylsilyl)aminopropyltriethoxysilane, N,N-bis(trimethylsilyl)aminopropylmethyldimethoxysilane, and N,N-bis(trimethylsilyl)aminopropylmethyldiethoxysilane; compounds having an N,N-bis(triethylsilyl)aminopropyl group as $A^2$, such as N,N-bis(triethylsilyl)aminopropyltrimethoxysilane, N,N-bis(trimethylsilyl)aminopropyltriethoxysilane, N,N-bis(triethylsilyl)aminopropylmethyldimethoxysilane, and N,N-bis(triethylsilyl)aminopropylmethyldiethoxysilane; compounds having an N,N',N'-tris(trimethylsilyl)-N-(2-aminoethyl)-3-aminopropyl group as $A^2$, such as N,N',N'-tris(trimethylsilyl)-N-(2-aminoethyl)-3-aminopropyltrimethoxysilane, N,N',N'-tris(trimethylsilyl)-N-(2-aminoethyl)-3-aminopropyltriethoxysilane, N,N',N'-tris(trimethylsilyl)-N-(2-aminoethyl)-3-aminopropylmethyldimethoxysilane, and N,N',N'-tris(trimethylsilyl)-N-(2-aminoethyl)-3-aminopropylmethyldiethoxysilane; and the like. Among these, preferred are compounds having a 3-dimethylaminopropyl group as $A^2$, and more preferred is 3-dimethylaminopropyltrimethoxysilane.

The hydrocarbyloxysilane compound suitably used is also a compound represented by General Formula (8) below:

[Chem. 6]

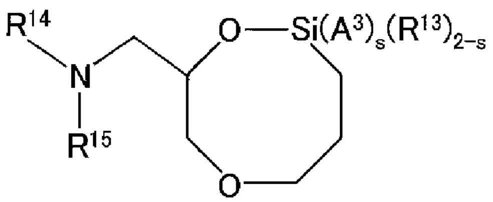

(8)

In General Formula (8) above, $A^3$ is a hydrocarbyloxy group; $R^{13}$ is an optionally substituted hydrocarbon group; $R^{14}$ and $R^{15}$ each independently represent an optionally substituted hydrocarbon group; $R^{14}$ and $R^{15}$ may be bonded to each other to form a ring structure together with the nitrogen atom bonded thereto; when $R^{14}$ and $R^{15}$ form the ring structure, $R^{14}$ and $R^{15}$ may form a ring structure together with the nitrogen atom bonded thereto and a heteroatom other than the nitrogen atom bonded thereto. s is an integer of 0 to 2.

In General Formula (8) above, $A^3$ is a hydrocarbyloxy group, and examples thereof include alkoxy groups such as a methoxy group, an ethoxy group, an n-propoxy group, an isopropoxy group, an n-butoxy group, an isobutoxy group, a sec-butoxy group, and a tert-butoxy group; alkenyloxy groups such as a vinyloxy group and an allyloxy group; aryloxy groups such as a phenoxy group and a naphthoxy group; aralkyloxy groups such as a benzyloxy group; and the like. Among these, preferred are alkoxy groups and aryloxy groups, more preferred are alkoxy groups, and particularly preferred are a methoxy group and an ethoxy group from the viewpoint of reactivity.

In General Formula (8) above, s (namely, the number of groups represented by $A^3$ in General Formula (8) above) is an integer of 0 to 2, and s is preferably 2. When s in General Formula (8) above is 2, two groups represented by $A^3$ contained in one molecule of the compound represented by General Formula (8) above may be the same or different.

In General Formula (8) above, $R^{13}$ represents an optionally substituted hydrocarbon group. $R^{13}$ can be any hydrocarbon group, and examples thereof include alkyl groups such as a methyl group, an ethyl group, an n-propyl group, an isopropyl group, an n-butyl group, an isobutyl group, a sec-butyl group, and a tert-butyl group; alkenyl groups

such as a vinyl group and an allyl group; alkynyl groups such as an ethynyl group and a propynyl group; aryl groups such as a phenyl group and a naphthyl group; aralkyl groups such as a benzyl group; and the like. Among these, preferred are alkyl groups and aryl groups, more preferred are alkyl groups, and particularly preferred are a methyl group and an ethyl group. The hydrocarbon group represented by $R^{13}$ may have a substituent other than a hydrocarbon group, and examples of the substituent include, but should not be limited to, groups containing a carbonyl group such as a carboxyl group, an acid anhydride group, a hydrocarbylcarbonyl group, an alkoxycarbonyl group, or an acyloxy group, an epoxy group, an oxy group, a cyano group, an amino group, a halogen group, and the like. When s in General Formula (8) above is 0, two groups represented by $R^{13}$ contained in one molecule of the compound represented by General Formula (8) above may be the same or different.

In General Formula (8) above, $R^{14}$ and $R^{15}$ each represent an optionally substituted hydrocarbon group. $R^{14}$ and $R^{15}$ may be bonded to each other to form a ring structure together with the nitrogen atom boned thereto. When these form a ring structure, these may form a ring structure together with the nitrogen atom bonded thereto and a heteroatom other than the nitrogen atom bonded thereto. When $R^{14}$ and $R^{15}$ are not bonded to each other, $R^{14}$ and $R^{15}$ can be any hydrocarbon groups. Examples of hydrocarbon groups include alkyl groups such as a methyl group, an ethyl group, an n-propyl group, an isopropyl group, an n-butyl group, an isobutyl group, a sec-butyl group, and a tert-butyl group; alkenyl groups such as a vinyl group and an allyl group; alkynyl groups such as an ethynyl group and a propynyl group; aryl groups such as a phenyl group and a naphthyl group; aralkyl groups such as a benzyl group; and the like. Among these, preferred are alkyl groups and aryl groups, more preferred are alkyl groups, and particularly preferred are a methyl group and an ethyl group. When $R^{14}$ and $R^{15}$ are bonded to each other to form a ring structure together with the nitrogen atom bonded thereto, examples of a divalent hydrocarbon group formed by bonding $R^{14}$ and $R^{15}$ include, but should not be limited to, alkylene groups such as an n-butylene group (when these with the nitrogen atom bonded thereto form a 1-pyrrolidine moiety in General Formula (8) above) and an n-pentylene group (when a 1-piperidine moiety is formed); a butadienylene group (when a 1-pyrrole moiety is formed); and the like.

When $R^{14}$ and $R^{15}$ are bonded to each other to form a ring structure together with the nitrogen atom bonded thereto, a preferred ring structure is a 4- to 8-membered ring structure.

The hydrocarbon groups represented by $R^{14}$ and $R^{15}$ may have a substituent other than a hydrocarbon group, irrespective of whether these form a ring structure or not, and examples of the substituent include, but should not be limited to, groups containing a carbonyl group such as a carboxyl group, an acid anhydride group, a hydrocarbylcarbonyl group, an alkoxycarbonyl group, or an acyloxy group, an epoxy group, an oxy group, a cyano group, an amino group, a halogen group, and the like. Furthermore, when $R^{14}$ and $R^{15}$ are bonded to each other to form a ring structure together with the nitrogen atom bonded thereto, the atoms forming the ring structure may also include a heteroatom other than the carbon atoms and the nitrogen atom bonded thereto. Examples of such a heteroatom include a nitrogen atom and an oxygen atom.

Examples of particularly preferred compounds represented by General Formula (8) above include those in which hydrocarbon groups represented by $R^{14}$ and $R^{15}$ are bonded to each other to form a piperazine ring structure together with the nitrogen atom bonded thereto. More specifically, a compound represented by General Formula (9) below is particularly preferred. When a compound represented by General Formula (8) above having such a structure is used, a cross-linked rubber having further enhanced fuel efficiency can be obtained.

[Chem. 7]

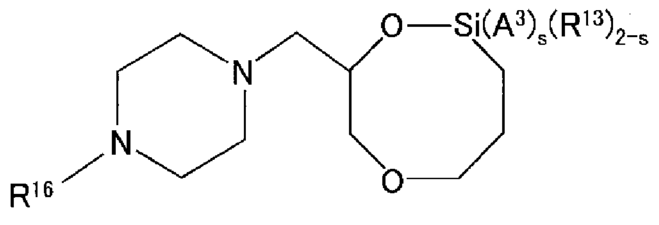

(9)

In General Formula (9) above, $A^3$, $R^{13}$, and s are as defined in General Formula (8) above, and $R^{16}$ represents a hydrocarbon group.

In General Formula (9) above, $R^{16}$ represents a hydrocarbon group. $R^{16}$ can be any hydrocarbon group, and examples thereof include alkyl groups such as a methyl group, an ethyl group, an n-propyl group, an isopropyl group, an n-butyl group, an isobutyl group, a sec-butyl group, and a tert-butyl group; alkenyl groups such as a vinyl group and an allyl group; alkynyl groups such as an ethynyl group and a propynyl group; aryl groups such as a phenyl group and a naphthyl group; aralkyl groups such as a benzyl group; and the like. Among these, preferred are alkyl groups and aryl groups, more preferred are alkyl groups, and particularly preferred is a methyl group.

Specific examples of the compound represented by General Formula (8) above include 2,2-dimethoxy-8-(4-methylpiperazinyl)methyl-1,6-dioxa-2-silacyclooctane, 2,2-diethoxy-8-(4-methylpiperazinyl)methyl-1,6-dioxa-2-silacyclooctane, 2,2-dimethoxy-8-(N,N-diethylamino)methyl-1,6-dioxa-2-silacyclooctane, 2-methoxy-2-methyl-8-(4-methylpiperazinyl)methyl-1,6-dioxa-2-silacyclooctane, and the like. These compounds represented by General Formula (8) above may be used alone or in combination.

Among these hydrocarbyloxysilane compounds, preferred are compounds represented by General Formula (7) above, more preferred are compounds where $A^2$ in General Formula (7) above is a group containing a primary amino group having active hydrogen atoms and/or a secondary amino group having an active hydrogen atom, and still more preferred are compounds where $A^2$ in General Formula (7) above is a group containing both of a primary amino group having active hydrogen atoms and a secondary amino group having an active hydrogen atom because the processability of the conjugated diene polymer and the wear resistance and fuel efficiency of a cross-linked rubber thereof can be further enhanced in a good balance.

In the conjugated diene polymer according to the present invention, the silicon content is 95 weight ppm or more. If the silicon content of the conjugated diene polymer is less than 95 weight ppm, it is difficult to enhance the processability of the conjugated diene polymer and the wear resistance and fuel efficiency of a cross-linked rubber thereof in a good balance.

In the conjugated diene polymer according to the present invention, the silicon content is 95 weight ppm or more, and is not particularly limited. The silicon content is preferably 120 weight ppm or more, more preferably 150 weight ppm or more, still more preferably 200 weight ppm or more, particularly preferably 250 weight ppm or more. When the silicon content falls within the ranges above, the interaction between the conjugated diene polymer and a filler such as silica can be further enhanced to further enhance the dispersibility of the filler such as silica. As a result, the processability of the conjugated diene polymer and the wear resistance and fuel efficiency of a cross-linked rubber thereof can be further enhanced in a good balance.

On the other hand, an appropriately small silicon content means that the conjugated diene polymer has an appropriately large molecular weight relative to the silicon content. When the conjugated diene polymer has an appropriately large molecular weight, polymer chains of the conjugated diene polymer are likely to be more effectively entangled to further enhance the wear resistance of a cross-linked rubber thereof. For this reason, the silicon content is preferably 3000 weight ppm or less, more preferably 2000 weight ppm or less, still more preferably 1000 weight ppm or less.

Examples of the method of controlling the silicon content include a method of controlling the content of units of the above-mentioned vinyl compound containing a functional group interactive with silica in the conjugated diene polymer, a method of selecting the type and the amount of the silicon atom-containing modifier described above, and the like.

The silicon content can be measured by X-ray fluorescence analysis or alkali fusion-inductively coupled plasma optical emission spectrometry (ICPAES). The silicon content is preferably measured by X-ray fluorescence analysis. When the conjugated diene polymer contains impurities or the like, the measured value of the silicon content may have an error. In such a case, the silicon content may be measured after the conjugated diene polymer is, as needed, subjected to Soxhlet extraction or the like to remove impurities or the like.

The conjugated diene polymer according to the present invention has an ionic strength index of 75% or less.

In this specification, the ionic strength index indicates a value obtained as follows: A sample solution containing the conjugated diene polymer and an internal standard polystyrene (molecular weight: 5000) is measured by gel permeation chromatography (GPC) using a styrene-based column (hereinafter, referred to as "GPC measurement" in some cases) and GPC measurement using a cation exchange column. Based on the results thereof, the value is calculated from Expression (I) below:

$$\text{ionic strength index (\%)} = \{1 - (A_{CX}/B_{CX}) \times (B_{sty}/A_{sty})\} \times 100 \quad \text{(I)}$$

$A_{CX}$: The peak area of the molecular weight distribution curve of the conjugated diene polymer obtained by GPC measurement using a cation exchange column

$B_{CX}$: The peak area of the peak of the internal standard polystyrene obtained by GPC measurement using a cation exchange column

$B_{sty}$: The peak area of the peak of the internal standard polystyrene obtained by GPC measurement using a styrene-based column

$A_{sty}$: The peak area of the molecular weight distribution curve of the conjugated diene polymer obtained by GPC measurement using a styrene-based column

Here, in the definitions of $A_{CX}$ and $A_{sty}$, the peak area of the molecular weight distribution curve of the conjugated diene polymer indicates the peak area of the molecular weight distribution curve obtained by removing a molecular weight region of less than 5000 from the molecular weight distribution curve obtained by the measurement and further removing the peak of the internal standard polystyrene.

A column containing a styrene divinylbenzene-based gel filler is defined as a styrene-based column.

Specifically, GPC measurement using a styrene-based column and GPC measurement using a cation exchange column can be performed under the conditions described later in Examples.

When the conjugated diene polymer contains impurities such as oil, the measured value of the ionic strength index may have an error. In such a case, the ionic strength index may be measured after the conjugated diene polymer is, as needed, subjected to Soxhlet extraction or the like to remove impurities or the like.

In the GPC measurement using a cation exchange column, ion interaction occurs between part of polymer chains of the conjugated diene polymer and the cation exchange column surface. For this reason, as a larger content of ionically interacting polymer chains is contained in the conjugated diene polymer and as the polymer chains have stronger ion interaction force, the peak intensity derived from the polymer chains in the molecular weight distribution curve obtained using the cation exchange column is lower than that in the molecular weight distribution curve obtained using the styrene-based column, and the ionic strength index determined from Expression (I) above becomes greater.

When the conjugated diene polymer has an ionic strength index of more than 75%, polymer chains of the conjugated diene polymer are likely to be excessively aggregated. Thus, the polymer chains of the conjugated diene polymer are likely to be insufficiently entangled, resulting in difficulties to enhance the processability of the conjugated diene polymer and the wear resistance and fuel efficiency of a cross-linked rubber thereof in a good balance. In particular, when the conjugated diene polymer has an ionic strength index of more than 75%, the wear resistance of a cross-linked rubber thereof is likely to be reduced.

The lower limit of the ionic strength index is 0% or more. The lower limit thereof is not particularly limited, and is preferably 0.5% or more. When the ionic strength index falls within the ranges above, polymer chains of the conjugated diene polymer appropriately interact to be more effectively entangled. Due to entanglement of polymer chains, a cross-linked rubber having further enhanced wear resistance can be obtained.

In particular, when the processability of the conjugated diene polymer is required, it is likely that the processability of the conjugated diene polymer can be further enhanced by setting the upper limit of the ionic strength index to preferably 60% or less, more preferably 45% or less, still more preferably 30% or less, further still more preferably 20% or less, particularly preferably 10% or less, most preferably 5% or less.

In particular, when a cross-linked rubber having wear resistance and fuel efficiency is required, it is likely that the wear resistance and fuel efficiency of a cross-linked rubber thereof can be further enhanced by setting the lower limit of the ionic strength index to more preferably 0.8% or more, still preferably 2% or more, still more preferably 3.5% or more, further still more preferably 9% or more, particularly preferably 20% or more, most preferably 30% or more.

The ionic strength index can be controlled by adjusting the proportion of polymer chains having a functional group interacting with the cation exchange column (such as a cationic group such as an amino group) in the conjugated diene polymer, the position of the functional group in the polymer chain (for example, inside the polymer chain, at a polymer chain terminal, or the like), the molecular structure in the vicinity of the functional group, the proportion of the functional group present, and the like, which are desirably used in appropriate combination.

The conjugated diene polymer according to the present invention preferably has a weight average molecular weight (Mw) of 200000 or more. A larger weight average molecular weight (Mw) further facilitates entanglement of polymer chains of the conjugated diene polymer. Thus, a cross-linked rubber thereof is likely to have further improved wear resistance. The conjugated diene polymer according to the present invention preferably has a weight average molecular weight (Mw) of 10000000 or less. When the weight average molecular weight (Mw) is appropriately small, the conjugated diene polymer has appropriately low viscosity during processing, and is likely to have further improved processability. For this reason, the weight average molecular weight (Mw) is in the range of preferably 200000 to 10000000, more preferably 350000 to 5000000, still more preferably 400000 to 5000000, still more preferably 500000 to 3000000, further still more preferably 500000 to 2000000, particularly preferably 500000 to 1500000, most preferably 550000 to 1200000.

The conjugated diene polymer according to the present invention preferably has a molecular weight distribution (Mw/Mn) of 1.5 or more. When the Mw/Mn is larger, the processability of the conjugated diene polymer and the wear resistance of a cross-linked rubber thereof are likely to be further improved. The molecular weight distribution (Mw/Mn) is preferably 1.5 to 5, more preferably 1.5 to 3, particularly preferably 1.55 to 3.

The conjugated diene polymer according to the present invention preferably has a molecular weight distribution curve where two or more peaks are present. Because it is likely that a larger number of peaks in the molecular weight distribution curve leads to a wider molecular weight distribution, it is likely that entanglement of polymer chains of the conjugated diene polymer are further facilitated, and the wear resistance of a cross-linked rubber thereof is further improved. The number of peaks in the molecular weight distribution curve is in the range of more preferably 2 to 6, still more preferably 3 to 5. Examples of a method of controlling the number of peaks in the molecular weight distribution curve to 2 or more include a method of synthesizing the conjugated diene polymer through polymerization of a monomer in which a polymerization initiator is additionally added during the polymerization to continue the polymerization; a method of coupling polymer chains prepared through polymerization; a method of blending two or more conjugated diene polymers

having molecular weight distribution curves preferably in the form of polymer solutions; and the like. These methods may be used in combination.

In this specification, when two or more peaks are present in the molecular weight distribution curve, a peak having the lowest molecular weight is defined as a first peak, and peaks after the first peak are defined as second peak, a third peak, and the like in ascending order of the molecular weight. For each of the peaks, the molecular weight of the maximum value in the molecular weight distribution curve is defined as the peak top molecular weight of the peak.

For example, when three peaks are present in the molecular weight distribution curve of the conjugated diene polymer according to the present invention, the peak top molecular weight of the first peak is in the range of preferably 80000 to 1500000, more preferably 90000 to 1200000, still more preferably 100000 to 800000. The peak top molecular weight of the second peak is in the range of preferably 150000 to 5000000, more preferably 170000 to 4000000, still more preferably 200000 to 3000000. The peak top molecular weight of the third peak is in the range of preferably 200000 to 5000000, more preferably 220000 to 4000000, still more preferably 250000 to 3000000.

For example, when four peaks are present in the molecular weight distribution curve of the conjugated diene polymer according to the present invention, the peak top molecular weight of the first peak is in the range of preferably 80000 to 1500000, more preferably 90000 to 1200000, still more preferably 100000 to 800000. The peak top molecular weight of the second peak is in the range of preferably 150000 to 5000000, more preferably 170000 to 4000000, still more preferably 200000 to 3000000. The peak top molecular weight of the third peak is in the range of preferably 200000 to 5000000, more preferably 220000 to 4000000, still more preferably 250000 to 3000000. The peak top molecular weight of the fourth peak is in the range of preferably 300000 to 5000000, more preferably 400000 to 4000000.

For example, when five peaks are present in the molecular weight distribution curve of the conjugated diene polymer according to the present invention, the peak top molecular weight of the first peak is in the range of preferably 80000 to 1500000, more preferably 90000 to 1200000, still more preferably 100000 to 800000. The peak top molecular weight of the second peak is in the range of preferably 150000 to 5000000, more preferably 170000 to 4000000, still more preferably 200000 to 3000000. The peak top molecular weight of the third peak is in the range of preferably 200000 to 5000000, more preferably 220000 to 4000000, still more preferably 250000 to 3000000. The peak top molecular weight of the fourth peak is in the range of preferably 300000 to 5000000, more preferably 400000 to 4000000, still more preferably 500000 to 3000000. The peak top molecular weight of the fifth peak is in the range of preferably 400000 to 5000000, more preferably 500000 to 4000000, still more preferably 600000 to 3000000.

The weight average molecular weight (Mw), the molecular weight distribution (Mw/Mn), the number of peaks in the molecular weight distribution curve, and the peak top molecular weights of the peaks can be measured by the following method. First, a sample solution containing the conjugated diene polymer and an internal standard polystyrene is measured by GPC using a styrene-based column as in the measurement of the ionic strength index above to obtain a molecular weight distribution curve of the conjugated diene polymer. Based on the obtained molecular weight distribution curve of the conjugated diene polymer, the weight average molecular weight (Mw) and the molecular weight distribution (Mw/Mn) can be determined against polystyrene standards. Moreover, the obtained molecular weight distribution curve of the conjugated diene polymer is divided into regions in each of which both ends are defined by the base line or minimum values and each of which has one maximum value, and the peak areas of the regions are determined. The number of regions having a peak area of 1% or more can be determined as the number of peaks of molecular weight, where the entire peak area of the molecular weight distribution curve of the conjugated diene polymer is 100%. Furthermore, among the peaks of the divided regions (limited to the regions having a peak area of 1% or more), a peak in a region of the lowest molecular weight is defined as a first peak, and peaks after the first peak are sequentially defined as a second peak, a third peak, and the like from the lower molecular weight side. The peak top molecular weights of the peaks (molecular weight indicating the maximum value in each region) can be determined.

The conjugated diene polymer according to the present invention has a Mooney viscosity (ML1+4) of preferably 10 or more and 200 or less, more preferably 20 or more and 150 or less, still more preferably 30 or more and 145 or less, particularly preferably 40 or more and 140 or less, most preferably 50 or more and 135 or less. A Mooney viscosity within the ranges above results in more favorable processability. The Mooney viscosity (ML1+4) is measured according to JIS K6300-1:2013 at 100°C.

From the viewpoint of handling properties, the conjugated diene polymer according to the present invention can be suitably used in the form of a mixture with an extender oil described later. When the conjugated diene polymer is used in the form of a mixture with an extender oil, the Mooney viscosity (ML1+4) of the conjugated diene polymer mixed with the extender oil can be determined as the Mooney viscosity (ML1+4) of the conjugated diene polymer. In this case, the suitable ranges and conditions for measurement of the Mooney viscosity (ML1+4) are as described above.

<Method of producing conjugated diene polymer>

The conjugated diene polymer according to the present invention can be prepared by polymerizing a monomer mixture containing at least a conjugated diene monomer in an inert solvent in the presence of a polymerization initiator,

for example. The conjugated diene polymer according to the present invention is preferably polymerized by solution polymerization.

Examples of the conjugated diene monomer contained in the monomer mixture include the same conjugated diene monomers which can be used to form the above-mentioned conjugated diene polymer as those listed above. Furthermore, the monomer mixture may contain the aromatic vinyl monomer, the vinyl compound containing a functional group interactive with silica, and the different monomer described above as needed.

Any inert solvent can be used in polymerization of the low molecular weight conjugated diene polymer as long as it is usually used in solution polymerization and does not inhibit the polymerization reaction. Specific examples of the inert solvent include linear aliphatic hydrocarbons such as butane, pentane, hexane, heptane, and 2-butene; alicyclic hydrocarbons such as cyclopentane, cyclohexane, and cyclohexene; aromatic hydrocarbons such as benzene, toluene, and xylene; and the like. These inert solvents may be used alone or in combination. The inert solvent is used in an amount providing a monomer concentration of 1 to 50% by weight, preferably 10 to 40% by weight, for example.

Any polymerization initiator can be used in polymerization of the low molecular weight conjugated diene polymer as long as it can catalyze polymerization of the monomer mixture containing a conjugated diene monomer. Specific examples thereof include polymerization initiators containing an organic alkali metal compound, an organic alkaline earth metal compound, or a lanthanum-series metal compounds as a primary catalyst, and the like. Examples of organic alkali metal compounds include organic lithium compounds, organic sodium compounds, organic potassium compounds, and the like, and specifically include organic monolithium compounds such as n-butyllithium, sec-butyllithium, t-butyllithium, hexyllithium, phenyllithium, and stilbenelithium; organic poly-lithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; and the like. Examples of organic alkaline earth metal compounds include di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, and the like. Examples of polymerization initiators containing a lanthanum-series metal compound as a primary catalyst include polymerization initiators containing a lanthanum-series metal salt of a lanthanum-series metal, such as lanthanum, cerium, praseodymium, neodymium, samarium, or gadolinium, and a carboxylic acid, a phosphorus-containing organic acid, or the like as a primary catalyst, and a cocatalyst such as an alkylaluminum compound, an organic aluminum hydride compound, or an organic aluminum halide compound. Among these polymerization initiators, organic monolithium compounds and organic poly-lithium compounds are preferably used, organic monolithium compounds are more preferably used, and n-butyllithium is particularly preferably used. The organic alkali metal compound may be preliminarily reacted with a secondary amine compound such as dibutylamine, dihexylamine, dibenzylamine, pyrrolidine, piperidine, hexamethyleneimine, or heptamethyleneimine, and used as organic alkali metal amide compounds. When an organic alkali metal amide compound is used as a polymerization initiator, a cross-linked rubber having further improved fuel efficiency and wear resistance can be obtained. These polymerization initiators may be used alone or in combination.

Examples of organic alkali metal amide compounds include organic alkali metal compounds reacted with a secondary amine compound. Among these, a compound represented by General Formula (10) below can be suitably used:

$$R^{17}\text{-}N(\text{-}R^{18})\text{-}M^1 \qquad (10)$$

In General Formula (10) above, $M^1$ represents an alkali metal atom; $R^{17}$ and $R^{18}$ each independently represent an alkyl group, a cycloalkyl group, an aryl group, an aralkyl group, a protecting group for an amino group, or a group which can be hydrolyzed to generate a hydroxyl group; $R^{17}$ and $R^{18}$ may be bonded to each other to form a ring structure together with the nitrogen atom bonded thereto; when $R^{17}$ and $R^{18}$ form a ring structure, the ring structure may include a heteroatom other than the nitrogen atom bonded thereto, as well as the nitrogen atom bonded thereto.

The alkyl group is not particularly limited, and is preferably a $C_1$ to $C_{20}$ alkyl group, more preferably $C_1$ to $C_{10}$ alkyl group. Examples of such alkyl groups include a methyl group, an ethyl group, an n-propyl group, an isopropyl group, an n-butyl group, an isobutyl group, a sec-butyl group, a tert-butyl group, an n-pentyl group, an n-hexyl group, an n-heptyl group, an n-octyl group, an n-decyl group, and the like.

The cycloalkyl group is not particularly limited, and is preferably a $C_3$ to $C_{20}$ cycloalkyl group, more preferably a $C_3$ to $C_{12}$ cycloalkyl group. Examples of such cycloalkyl groups include a cyclopropyl group, a cyclopentyl group, a cyclohexyl group, a cycloheptyl group, a cyclooctyl group, a cyclododecyl group, and the like.

The aryl group is not particularly limited, and is preferably a $C_6$ to $C_{12}$ aryl group, more preferably a $C_6$ to $C_{10}$ aryl group. Examples of such aryl groups include a phenyl group, a 1-naphthyl group, a 2-naphthyl group, and the like.

The aralkyl group is not particularly limited, and is preferably a $C_7$ to $C_{13}$ aralkyl group, more preferably a $C_7$ to $C_9$ aralkyl group. Examples of such aralkyl groups include a benzyl group, a phenethyl group, and the like.

The protecting group for an amino group is not particularly limited as long as it acts as a protecting group for

an amino group. Examples thereof include alkylsilyl groups, and the like. Examples of such alkylsilyl groups include a trimethylsilyl group, a triethylsilyl group, a triphenylsilyl group, a methyldiphenylsilyl group, an ethylmethylphenylsilyl group, a tert-butyldimethylsilyl group, and the like.

When $R^{17}$ and/or $R^{18}$ is a protecting group for an amino group, as a result of removal of the protecting group for an amino group, a structure represented by General Formula (12) described later in which $R^{19}$ and/or $R^{20}$ is a hydrogen atom can be introduced to one of the terminals of the polymer chain forming the low molecular weight conjugated diene polymer to be prepared.

The group which can be hydrolyzed to generate a hydroxyl group is not particularly limited as long as the group is hydrolyzed in the presence of, for example, an acid to generate a hydroxyl group. Examples thereof include alkoxyalkyl groups, groups containing an epoxy group, and the like.

Examples of alkoxyalkyl groups include a methoxymethyl group, an ethoxymethyl group, an ethoxyethyl group, a propoxymethyl group, a butoxymethyl group, a butoxyethyl group, a propoxyethyl group, and the like.

Examples of groups containing an epoxy group include a group represented by General Formula (11) below:

$$-Z^3-Z^4-E^2 \qquad (11)$$

In General Formula (11) above, $Z^3$ is a $C_1$ to $C_{10}$ alkylene group or alkylarylene group, $Z^4$ is a methylene group, a sulfur atom, or an oxygen atom, and $E^2$ is a glycidyl group.

$R^{17}$ and $R^{18}$ may be bonded to each other to form a ring structure together with the nitrogen atom bonded thereto. In this case, specific examples of the structure formed by $R^{17}$ and $R^{18}$ and the nitrogen atom bonded thereto include an azetidine ring (where $R^{17}$ and $R^{18}$ form a propylene moiety), a pyrrolidine ring (where $R^{17}$ and $R^{18}$ form a butylene moiety), a piperidine ring (where $R^{17}$ and $R^{18}$ form a pentylene moiety), a hexamethylene imine ring (where $R^{17}$ and $R^{18}$ form a hexylene moiety), and the like. When $R^{17}$ and $R^{18}$ are bonded to each other to form a ring structure together with the nitrogen atom bonded thereto, the ring structure is preferably a 4- to 8-membered ring structure.

In General Formula (10) above, $M^1$ is an alkali metal atom, and examples of such an alkali metal atom include lithium, sodium, and potassium atoms, and the like. Among these, preferred is a lithium atom from the viewpoint of polymerization activity.

When the compound represented by General Formula (10) above is used as the polymerization initiator, the amine structure forming the organic alkali metal amide compound remains as a residue bonded to the polymerization starting terminal of the polymer chain. For this reason, when the compound represented by General Formula (10) above is used as the polymerization initiator, a structure represented by General Formula (12) below is introduced to one of the terminals of the polymer chain of the resulting low molecular weight conjugated diene polymer.

$$R^{19}-N(-R^{20})- \qquad (12)$$

In General Formula (12) above, $R^{19}$ and $R^{20}$ each independently represent a hydrogen atom, an alkyl group, a cycloalkyl group, an aryl group, an aralkyl group, a protecting group for an amino group, or a group which can be hydrolyzed to generate a hydroxyl group; $R^{19}$ and $R^{20}$ may be bonded to each other to form a ring structure together with the nitrogen atom bonded thereto; when $R^{19}$ and $R^{20}$ form a ring structure, the ring structure may include a heteroatom other than the nitrogen atom bonded thereto, as well as the nitrogen atom bonded thereto.

Examples of alkyl groups, cycloalkyl groups, aryl groups, aralkyl groups, protecting groups for an amino group, and groups which can be hydrolyzed to generate a hydroxyl group for $R^{19}$ and $R^{20}$ include the same groups listed as those for $R^{17}$ and $R^{18}$ in General Formula (10) above. When $R^{19}$ and $R^{20}$ are bonded to each other to form a ring structure together with the nitrogen atom bonded thereto, the same as those in $R^{17}$ and $R^{18}$ in General Formula (10) above can be listed. The hydrogen atoms which can be $R^{19}$ and $R^{20}$ are introduced as a result of removal of the protecting group for an amino group.

The organic alkali metal amide compound as the polymerization initiator can be added to the polymerization system by any method. A method of preliminarily reacting a secondary amine compound with an organic alkali metal compound to prepare an organic alkali metal amide compound, and mixing this with a monomer containing the conjugated diene monomer to allow polymerization to proceed can be used. An alternative method may be used in which an organic alkali metal compound and a secondary amine compound are separately added to the polymerization system, and are mixed with a monomer containing the conjugated diene monomer to generate an organic alkali metal amide compound which allows polymerization to proceed in the polymerization system. The reaction conditions such as the reaction temperature are not particularly limited, and can be selected according to the desired polymerization conditions, for example.

The amount of the secondary amine compound to be used may be determined according to the desired amount of a polymerization initiator used, and is in the range of usually 0.01 to 1.5 mmol, preferably 0.1 to 1.2 mmol, more preferably 0.5 to 1.0 mmol per mmol of the organic alkali metal compound.

The amount of the polymerization initiator used can be determined according to the desired conjugated diene polymer, and is in the range of usually 1 to 50 mmol, preferably 1.5 to 20 mmol, more preferably 2 to 15 mmol per 1000 g of the monomer.

After polymerization is started in the presence of the polymerization initiator, a polymerization initiator re-addition operation may be performed, the operation comprising further adding the polymerization initiator to the polymerization system to continue the polymerization. The timing of performing the polymerization initiator re-addition operation and the number of times thereof are not particularly limited, and may be determined according to the desired molecular weight distribution curve of the conjugated diene polymer. In each time of the re-addition operation, the polymerization initiator is used in an amount of preferably 0.1 to 0.7 mol, more preferably 0.2 to 0.6 mol relative to 1 mol of the polymerization initiator used to start polymerization.

The polymerization temperature is in the range of usually -80 to +150°C, preferably 0 to 100°C, more preferably 30 to 90°C. The polymerization can be performed in any manner such as a batch or continuous mode. Preferred is a batch method when the conjugated diene compound and the aromatic vinyl compound are copolymerized, because randomness in bonding of conjugated diene monomer units and aromatic vinyl monomer units can be readily controlled.

In polymerization of the monomer mixture containing the conjugated diene monomer, a polar compound is preferably added to an inert organic solvent to control the vinyl bond content of conjugated diene monomer units in the conjugated diene polymer to be prepared. Examples of the polar compound include ether compounds such as ethylene glycol diethyl ether, ethylene glycol dibutyl ether, dibutyl ether, and tetrahydrofuran; tertiary amines such as tetramethylethylenediamine; alkali metal alkoxides; phosphine compounds; and the like. Among these, preferred are ether compounds and tertiary amines. More preferred are ethylene glycol diethyl ether, ethylene glycol dibutyl ether, and tertiary amines. Sill more preferred are tertiary amines, and particularly preferred is tetramethylethylenediamine. These polar compounds may be used alone or in combination. The amount of the polar compound to be used may be determined according to a desired vinyl bond content, and is preferably 0.001 to 100 mol, more preferably 0.01 to 10 mol per mol of the polymerization initiator. When the amount of the polar compound to be used falls within the ranges above, control of the vinyl bond content of the conjugated diene monomer units is facilitated, and in addition, and failure caused by deactivation of the polymerization initiator hardly occurs.

The conjugated diene polymer according to the present invention may be prepared by a production method comprising a step of polymerizing a monomer (a) containing isoprene in an inert solvent in the presence of a polymerization initiator to form a polymer block (A) having an active terminal; and a step of mixing the polymer block (A) having an active terminal with a monomer (b) containing 1,3-butadiene to continue polymerization, thereby forming the polymer block (A) and a polymer block (B) .

By using such a production method, the conjugated diene polymer can be obtained in which the polymer block (A) containing isoprene monomer units and the polymer block (B) containing 1,3-butadiene monomer units are formed as one molecule. As a result, the processability of the conjugated diene polymer and the wear resistance and fuel efficiency of a cross-linked rubber thereof can be further enhanced in a good balance.

The monomer (a) for forming the polymer block (A) can be any monomer containing isoprene, and monomer(s) can be selected according to the monomer composition of the polymer block (A) to be formed. For example, when a polymer block (A) formed of isoprene monomer units and aromatic vinyl monomer units is prepared, the monomer (a) may be one containing isoprene and an aromatic vinyl monomer. When a polymer block (A) formed of units of a vinyl compound having a functional group interactive with silica in addition to isoprene monomer units and aromatic vinyl monomer units is prepared, the monomer (a) may be one containing a vinyl compound having a functional group interactive with silica in addition to isoprene and an aromatic vinyl monomer. Hereinafter, such an embodiment will be described.

It is sufficient that the polymer block (A) contains isoprene monomer units. The polymer block is not particularly limited, and may consist only of isoprene monomer units, or may consist of isoprene monomer units and monomer units other than the isoprene monomer units. In this case, suitable examples of the monomer units other than the isoprene monomer units include aromatic vinyl monomer units. Preferably, the polymer block (A) also contains aromatic vinyl monomer units in addition to isoprene monomer units.

The proportion of isoprene monomer units in the polymer block (A) is preferably 50% by weight or more, more preferably 70% by weight or more, still more preferably 90% by weight or more. The upper limit of the proportion of isoprene monomer units is not particularly limited, and is preferably 99% by weight or less. By controlling the proportion of isoprene monomer units in the polymer block (A) within the ranges above, the compatibility between the low molecular weight conjugated diene polymer and a filler such as silica can be further enhanced, which can further enhance the processability of the conjugated diene polymer and the wear resistance and fuel efficiency of a cross-linked rubber thereof in a good balance.

Examples of the aromatic vinyl monomer used to form aromatic vinyl monomer units contained in the polymer block (A) include the same aromatic vinyl monomers as those listed above. Among these, styrene is preferred. These aromatic vinyl monomers may be used alone or in combination. The proportion of aromatic vinyl monomer units in the

polymer block (A) is preferably 50% by weight or less, more preferably 30% by weight or less, still more preferably 10% by weight or less. The lower limit of the proportion of aromatic vinyl monomer units is not particularly limited, and is preferably 1% by weight or more.

Moreover, units of the vinyl compound having a functional group interactive with silica may be contained in at least one of the polymer block (A) and the polymer block (B) described later in the conjugated diene polymer. In this case, units of the vinyl compound having a functional group interactive with silica may be contained only in the polymer block (A), may be contained only in the polymer block (B), and may be contained both in the polymer block (A) and the polymer block (B).

In any of the cases where units of the vinyl compound having a functional group interactive with silica are contained in one or both of the polymer block (A) and the polymer block (B), the proportion thereof is preferably adjusted to the range of preferably 0.01 to 20% by weight, more preferably 0.02 to 2% by weight, particularly preferably 0.03 to 1% by weight relative to the total monomer units forming the conjugated diene polymer. By controlling the proportion of units of the vinyl compound having a functional group interactive with silica within the ranges above, the processability of the conjugated diene polymer can be further enhanced, the wear resistance and fuel efficiency of a cross-linked rubber thereof can be further enhanced in a good balance, and furthermore, handling stability can also be improved.

The polymer block (A) may contain additional monomer units as desired in addition to isoprene monomer units, and aromatic vinyl monomer units and units of the vinyl compound having a functional group interactive with silica contained as needed. Examples of an additional compound used to form additional monomer units include linear olefin compounds such as ethylene, propylene, and 1-butene; cyclic olefin compounds such as cyclopentene and 2-norbornene; conjugated diene monomers other than isoprene, such as 1,3-butadiene, 2,3-dimethyl-1,3-butadiene, 2-chloro-1,3-butadiene, 1,3-pentadiene, and 1,3-hexadiene; non-conjugated diene monomers such as 1,5-hexadiene, 1,6-heptadiene, 1,7-octadiene, dicyclopentadiene, and 5-ethylidene-2-norbornene; and the like. These additional monomers may be used alone or in combination. The proportion of additional monomer units in the polymer block (A) is preferably 20% by weight or less, more preferably 10% by weight or less, still more preferably 6% by weight or less.

The polymer block (A) is formed by polymerizing the monomer (a) containing isoprene in an inert solvent in the presence of a polymerization initiator. The polymer block (A) formed has an active terminal.

Examples of the inert solvent used in polymerization of the monomer to form the polymer block (A) include the same inert solvents listed above. The inert solvent is used in an amount providing a monomer concentration of preferably 1 to 80% by weight, more preferably 10 to 50% by weight.

The polymerization initiator used to form the polymer block (A) can be any polymerization initiator as long as the monomer (a) containing isoprene is polymerized to provide a polymer chain having an active terminal. Specific examples thereof include the same polymerization initiators as those listed above.

The amount of the polymerization initiator used can be selected according to the desired molecular weight, and is in the range of preferably 4 to 250 mmol, more preferably 6 to 200 mmol, particularly preferably 10 to 70 mmol per 100 g of the monomer (a) containing isoprene.

The polymerization temperature in polymerization of the monomer (a) containing isoprene is in the range of preferably -80 to +150°C, more preferably 0 to 100°C, still more preferably 20 to 90°C. The polymerization can be performed in any manner such as a batch or continuous mode. When the polymer block (A) is formed as a copolymer chain, the bonding form of the monomers can be a variety of bonding forms such as a block form, a tapered form, and a random form, and preferred is a random form.

In polymerization, a polar compound is preferably added to an inert solvent to control the vinyl bond content of isoprene monomer units in the polymer block (A). Examples of a polar compound to be used include the same polar compounds as those listed above. The amount of the polar compound used may be determined according to the desired vinyl bond content, and is preferably 0.01 to 30 mol, more preferably 0.05 to 10 mol relative to 1 mol of the polymerization initiator. When the amount of the polar compound to be used falls within the ranges above, control of the vinyl bond content of isoprene monomer units is facilitated, and in addition, failure caused by deactivation of the polymerization initiator hardly occurs. Moreover, the vinyl bond content of isoprene monomer units can be increased by increasing the amount of the polar compound used within the ranges above.

The vinyl bond content of isoprene monomer units in the polymer block (A) is preferably 5 to 90% by weight, more preferably 5 to 80% by weight. By controlling the vinyl bond content of isoprene monomer units within the ranges above, a cross-linked rubber having further improved fuel efficiency can be obtained. In this specification, the vinyl bond content of isoprene monomer units indicates the proportion of the total amount of isoprene monomer units having a 1,2-structure and isoprene monomer units having a 3,4-structure in the isoprene monomer units.

The polymer block (A) has a weight average molecular weight (Mw) in the range of preferably 1,000 to 30,000, more preferably 1,500 to 20,000, still more preferably 2,000 to 10,000. By controlling the weight average molecular weight (Mw) of the polymer block (A) within the ranges above, a cross-linked rubber having further improved fuel efficiency can be obtained.

The molecular weight distribution represented by the ratio (Mw/Mn) of the weight average molecular weight

(Mw) of the polymer block (A) to the number average molecular weight (Mn) thereof is preferably 1.0 to 1.5, more preferably 1.0 to 1.3. When the molecular weight distribution (Mw/Mn) of the polymer block (A) falls within the ranges above, the conjugated diene polymer is more readily prepared. The weight average molecular weight (Mw) and the number average molecular weight (Mn) of the polymer block (A) can be determined as values against polystyrene standards by gel permeation chromatography.

It is sufficient that the polymer block (B) contains 1,3-butadiene monomer units. The polymer block is not particularly limited, and may consist only of 1,3-butadiene monomer units, or may consist of 1,3-butadiene monomer units and monomer units other than the 1,3-butadiene monomer units. In this case, suitable examples of the monomer units other than the 1,3-butadiene monomer units include aromatic vinyl monomer units. Preferably, the polymer block (B) also contains aromatic vinyl monomer units in addition to 1,3-butadiene monomer units.

The proportion of 1,3-butadiene monomer units in the polymer block (B) is preferably 45% by weight or more, more preferably 50 to 94.98% by weight, still more preferably 55 to 89.97% by weight. By controlling the proportion of 1,3-butadiene monomer units in the polymer block (B) within the ranges above, the conjugated diene polymer is more readily prepared.

Examples of aromatic vinyl monomers used to form aromatic vinyl monomer units contained in the polymer block (B) include the same aromatic vinyl monomers as those listed above. Among these, styrene is preferred. The proportion of aromatic vinyl monomer units is preferably 54.99% by weight or less, more preferably 5 to 49.98% by weight, still more preferably 10 to 44.97% by weight.

Furthermore, at least one of the polymer block (A) and the polymer block (B) preferably contains units of a vinyl compound having a functional group interactive with silica. More preferably, at least the polymer block (B) contains units of a vinyl compound containing a functional group interactive with silica because the processability of the conjugated diene polymer can be further enhanced and the wear resistance and fuel efficiency of a cross-linked rubber thereof can be further enhanced in a good balance. When the polymer block (B) contains units of a vinyl compound containing a functional group interactive with silica, the proportion of the content thereof is not particularly limited. Preferably, the proportion of the content thereof relative to the total monomer units forming the final product of the conjugated diene polymer according to the present invention falls within the above-mentioned suitable ranges.

Furthermore, the polymer block (B) may contain additional monomer units as desired in addition to 1,3-butadiene monomer units, and aromatic vinyl monomer units and units of the vinyl compound having a functional group interactive with silica contained as needed. Examples of an additional compound forming such additional monomer units include the same compounds as those for the polymer block (A) listed above (excluding 1,3-butadiene), and isoprene. The proportion of additional monomer units in the polymer block (B) is preferably 40% by weight or less, more preferably 35% by weight or less, still more preferably 25% by weight or less.

The polymer block (B) and the polymer block (A) are formed as one molecule by mixing the polymer block (A) having an active terminal and the monomer (b) containing 1,3-butadiene to continue polymerization. The polymer block (B) formed has an active terminal. In contrast, the active terminal disappears from the polymer block (A).

The inert solvent used in polymerization of the polymer block

(A) and the monomer (b) containing 1,3-butadiene to form the polymer block
(B) is not particularly limited, and the same inert solvents as those listed above can be used.

The amount of the polymer block (A) having an active terminal used in formation of the polymer block (B) can be determined according to the desired molecular weight, and is in the range of preferably 0.1 to 5 mmol, more preferably 0.15 to 2 mmol, still more preferably 0.2 to 1.5 mmol per 100 g of the monomer (b) containing 1,3-butadiene.

The polymer block (A) and the monomer (b) containing 1,3-butadiene can be mixed by any method. The polymer block (A) having an active terminal may be added to a solution of the monomer (b) containing 1,3-butadiene, or the monomer (b) containing 1,3-butadiene may be added to a solution of the polymer block (A) having an active terminal. To control polymerization, preferred is a method of adding the polymer block (A) having an active terminal to a solution of the monomer (b) containing 1,3-butadiene.

In polymerization of the monomer (b) containing 1,3-butadiene, the polymerization temperature is in the range of preferably -80 to +150°C, more preferably 0 to 100°C, still more preferably 20 to 90°C. The polymerization can be performed in any manner such as a batch or continuous mode. When the polymer block (B) is formed as a copolymer chain, preferred is a batch mode because the randomness in bonding is readily controlled.

When the polymer block (B) is formed as a copolymer chain, the bonding form of the monomers can be a variety of bonding forms such as a block form, a tapered form, and a random form. Among these, preferred is a random form. When the monomers are bonded at random, a cross-linked rubber having further improved fuel efficiency can be obtained.

According to one embodiment of the present invention, as in the control of the vinyl bond content of isoprene monomer units in the polymer block (A), a polar compound is preferably added to an inert solvent during polymerization to control the vinyl bond content of 1,3-butadiene monomer units in the polymer block (B). To be noted, when the polymer

block (A) is prepared in the presence of the polar compound added to the inert solvent in a sufficient amount to control the vinyl bond content of 1,3-butadiene monomer units in the polymer block (B), the polar compound need not be further added. Examples of the polar compound to be used to control the vinyl bond content include the same polar compounds as those listed above. The amount of the polar compound used may be determined according to the desired vinyl bond content, and may be adjusted in the range of preferably 0.01 to 100 mol, more preferably 0.1 to 30 mol relative to 1 mol of the polymerization initiator used in the first polymerization reaction (polymerization reaction to form the first polymer block (A)). When the amount of the polar compound used falls within the ranges above, the control of the vinyl bond content of 1,3-butadiene monomer units is facilitated, and failure caused by deactivation of the polymerization initiator hardly occur.

The vinyl bond content of 1,3-butadiene monomer units in the polymer block (B) is preferably 1 to 90% by weight, more preferably 3 to 80% by weight, particularly preferably 5 to 75% by weight. When the vinyl bond content of 1,3-butadiene monomer units in the polymer block (B) is controlled within the ranges above, a cross-linked rubber having more excellent fuel efficiency can be obtained.

Thus, a polymer chain including the polymer block (A) and the polymer block (B) and having an active terminal can be prepared. From the viewpoint of productivity, the polymer chain having an active terminal preferably has a structure of polymer block (A)-polymer block (B) in which the polymer block (B) is terminated with an active terminal. The polymer chain may contain a plurality of polymer blocks (A), or may contain another polymer block. Examples of the polymer chain include polymer chains having an active terminal, such as polymer block (A)-polymer block (B)-polymer block (A), and the like. In this case, an active terminal is formed at the terminal of the polymer block (A) formed subsequent to the polymer block (B). When an polymer block (A) is formed at the active terminal of the polymer chain having an active terminal, the amount of isoprene used is preferably 10 to 100 mol, more preferably 15 to 70 mol, preferably particularly 20 to 35 mol relative to 1 mol of the polymerization initiator used in the first polymerization reaction (polymerization reaction to form the first polymer block (A)).

The weight ratio of the polymer block (A) to the polymer block (B) (weight of polymer block (A))/(weight of polymer block (B)) in the polymer chain having an active terminal (weight ratio of the total weight of polymer blocks (A) to that of polymer blocks (B) when a plurality of polymer blocks (A) and a plurality of polymer blocks (B) are present) is preferably 0.001 to 0.2, more preferably 0.005 to 0.1, particularly preferably 0.01 to 0.05. By controlling the weight ratio of the polymer block (A) to the polymer block (B) within the ranges above, the processability of the conjugated diene polymer can be further improved, and a cross-linked rubber having further enhanced wear resistance and fuel efficiency in a good balance can be obtained.

As described above, the conjugated diene polymer can be prepared in the inert solvent. The conjugated diene polymer thus prepared usually has an active terminal.

The conjugated diene polymer having an active terminal may be reacted with a coupling agent to form coupled polymer chains. Examples of the coupling agent include, but should not be limited to, silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyl triethoxysilane, ethyl trimethoxysilane, dimethoxydiethylsilane, diethoxydimethylsilane, tetraethoxysilane, ethyltriethoxysilane, diethoxydiethylsilane, bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, 1,6-bis(trichlorosilyl)hexane, and the like. Among these, preferred is used of a tri- or higher functional coupling agent, and more preferred is use of a tetra- or higher functional coupling agent because a cross-linked rubber having enhanced mechanical properties can be obtained while sufficient processability of the conjugated diene polymer is maintained.

When a coupling agent is used, preferably, the polymer chains having an active terminal prepared by the above-mentioned polymerization method are partially converted into coupled polymer chains by the coupling reaction to prepare a solution containing the polymer chains having an active terminal and the coupled polymer chains. In this case, the amount of the coupling agent used is not particularly limited. The amount thereof is preferably less than 1 mol, preferably 0.01 to 0.4 mol, more preferably 0.02 to 0.3 mol in terms of the functional group(s) of the coupling agent relative to 1 mol of the polymerization initiator used at the start of polymerization in order to readily couple only part of the polymer chains having an active terminal. When the amount of the coupling agent used falls within the ranges above, a cross-linked rubber having further enhanced fuel efficiency can be obtained. As a result of addition of the coupling agent, the active terminals of the polymer chains having an active terminal are reacted in the coupling reaction, and thus the active terminal disappears from the coupled polymer chains, and polymer chains without an active terminal are formed.

Preferably, after the polymer chains having an active terminal are partially coupled, a monomer containing a conjugated diene compound is further polymerized to the polymer chains having an active terminal other than the coupled polymer chains. These reactions are preferably continuously performed. Specifically, in a preferred embodiment, after polymerization is started, the coupling reaction by adding the coupling agent is performed while the polymerization reaction is being continued, and subsequently the polymerization reaction after the coupling reaction is performed.

The monomer used in the polymerization after the coupling reaction may be a monomer containing at least a

conjugated diene monomer. To prepare a conjugated diene polymer containing conjugated diene monomer units and aromatic vinyl monomer units, the monomer preferably contains an aromatic vinyl monomer. Furthermore, in the polymerization after the coupling reaction, the monomer used in the polymerization preferably contains a vinyl compound containing a functional group interactive with silica. If the vinyl compound containing a functional group interactive with silica is used, units of a vinyl compound containing a functional group interactive with silica can be preferentially introduced to the polymer chains other than the coupled polymer chains. Thereby, the polymer chains other than the coupled polymer chains can have an effectively increased degree of adsorption onto silica. This enable production of a cross-linked rubber having further enhanced fuel efficiency can be obtained while ensuring favorable processability.

The polymerization after the coupling reaction is performed in an inert solvent. The inert solvent is not particularly limited, and can be the same inert solvents as those listed above. The polymerization temperature and the polymerization manner are not particularly limited, and may be the same as those described above. The bonding form of the monomers can be a variety of bonding forms such as a block form, a tapered form, and a random form. Among these, a random form is preferred. When the monomers are bonded at random, a cross-linked rubber having further improved fuel efficiency can be obtained.

Furthermore, the polymerization initiator re-addition operation is preferably performed at the start of the polymerization after the coupling reaction or during the polymerization. The timing of performing the polymerization initiator re-addition and the number of times thereof are not particularly limited, and may be determined according to the desired molecular weight distribution of the conjugated diene polymer. The amount of the polymerization initiator further added in this operation is not particularly limited, and is preferably 0.1 to 0.7 mol, more preferably 0.2 to 0.6 mol relative to 1 mol of the polymerization initiator used at the start of the polymerization.

To make the effects of the present invention more remarkable, preferably, the active terminals contained in the conjugated diene polymer prepared through polymerization or the active terminals which can be contained in the conjugated diene polymer after the coupling reaction are reacted with a modifier to prepare a conjugated diene polymer having a modifying group (modified conjugated diene polymer). Examples of a modifier used to form a modifying group which can be contained in the conjugated diene polymer according to the present invention include the same modifiers as those listed above. By using a modifier which can exhibit coupling action (such as polyorganosiloxane), the number of peaks in the molecular weight distribution curve of the conjugated diene polymer can be controlled.

When the modifier used is a siloxane compound, it is preferred that the polymer chain having an active terminal, the siloxane compound, and an organic metal compound be reacted. Thereby, the conjugated diene polymer can have higher processability. Examples of the organic metal compound used in this reaction include organic alkali metal compounds, and examples of organic alkali metal compounds include organic lithium compounds, organic sodium compounds, organic potassium compounds, and the like, and specifically include organic monolithium compounds such as n-butyllithium, sec-butyllithium, t-butyllithium, hexyllithium, phenyllithium, and stilbenelithium; organic poly-lithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; and the like. Among these organic metal compounds, n-butyllithium is preferably used. The amount of the organic metal compound used in this reaction is preferably 0.05 to 10 mol, more preferably 0.01 to 5 mol relative to 1 mol of the siloxane compound used. When the amount of the organic metal compound used falls within the ranges above, the conjugated diene polymer can have higher processability. These organic metal compounds may be used alone or in combination.

Examples of a method of reacting the polymer chain having an active terminal with the siloxane compound and the organic metal compound include a method of mixing the polymer chain having an active terminal with the siloxane compound, and then mixing the organic metal compound; a method of mixing the polymer chain having an active terminal with the organic metal compound, and mixing the siloxane compound; a method of simultaneously (or sequentially) adding the siloxane compound and the organic metal compound to the polymer chain having an active terminal, and mixing these; and the like. To further improve the processability of the conjugated diene polymer, preferred is a method of mixing the polymer chain having an active terminal with the organic metal compound, and then mixing the siloxane compound.

In the method of mixing the polymer chain having an active terminal with the organic metal compound, and then mixing the siloxane compound, for its simplicity, preferred is a method of adding the organic metal compound to the polymerization solution used in polymerization to prepare polymer chains having an active terminal, mixing these, and adding the siloxane compound to the mixed solution. At this time, it is preferred that the organic metal compound be added to the polymerization solution in the form of a solution in an inert solvent, and the solution concentration is preferably in the range of 1 to 50% by weight. The temperature during addition of the organic metal compound is not particularly limited, and is usually 0 to 120°C.

The organic metal compound can be added to the solution containing polymer chains having an active terminal at any timing. To enhance the reactivity of the siloxane compound in the presence of the organic metal compound, it is desired that the organic metal compound is added to the solution after the polymerization conversion ratio reaches

preferably 90% or more, more preferably 95% or more. It is also desired that the organic metal compound is added to the solution after the monomer is consumed to 5000 ppm or less.

When the siloxane compound is added to the solution containing polymer chains having an active terminal and the organic metal compound, the siloxane compound is preferably added to the polymerization system in the form of a solution in an inert solvent, and the solution concentration is preferably in the range of 1 to 50% by weight. The reaction temperature when the siloxane compound is reacted is not particularly limited, and is usually 0 to 120°C. The reaction time is also not particularly limited, and is usually 1 to 60 minutes.

The siloxane compound can be added to the solution containing polymer chains having an active terminal and the organic metal compound at any timing after the organic metal compound is added to the solution containing polymer chains having an active terminal. Desirably, the siloxane compound is added to the solution after the organic metal compound is added to the solution containing polymer chains having an active terminal and these are mixed for preferably 1 to 180 minutes, more preferably 5 to 60 minutes, still more preferably 10 to 30 minutes. Such addition of the siloxane compound can further improve the processability of the conjugated diene polymer.

The conjugated diene polymer prepared through the reaction by the method of mixing the polymer chain having an active terminal with the organic metal compound, and then mixing the siloxane compound contains polymer chains which have a modifying structure derived from the siloxane compound and introduced into polymer chain terminals and are products of the reaction with the organic metal compound. Besides, the conjugated diene polymer may contain unmodified conjugated diene polymer chains not modified with the siloxane compound, and/or siloxane-modified conjugated diene polymer chains not reacted with the organic metal compound.

When the modifier is reacted with the active terminal of the conjugated diene polymer, the amount of the modifier used is not particularly limited, and is preferably 0.01 to 10.0 mol, more preferably 0.02 to 5.0 mol, particularly preferably 0.05 to 2.0 mol relative to 1 mol of the active terminal in the polymer chain having an active terminal (relative to 1 mol of the metal atom in the organic alkali metal compound when an organic alkali metal compound is used as the polymerization initiator). These modifiers may be used alone or in combination.

Examples of a method of reacting the modifier with the active terminal of the conjugated diene polymer include, but should not be limited to, a method of mixing the modifier and the polymer chain having an active terminal in a solvent which can dissolve these, and the like. Examples of the solvent used at this time include the same solvents as those used in polymerization of the conjugated diene polymer described above. At this time, for its simplicity, preferred is a method of adding the modifier to the polymerization solution used in the polymerization while the polymerization solution contains the resulting polymer chains having an active terminal as they are. At this time, the modifier may be added to the polymerization system in the form of a solution in an inert solvent used in the polymerization above, and the solution concentration is preferably in the range of 1 to 50% by weight. The reaction temperature is not particularly limited, and is usually 0 to 120°C. The reaction time is not particularly limited, and is usually 1 minute to 1 hour.

The modifier can be added to the solution containing polymer chains having an active terminal at any timing. Desirably, the modifier is added to the solution while the polymerization reaction has not completed yet and the solution containing polymer chains having an active terminal also contains the monomer, more specifically, while the solution containing polymer chains having an active terminal contains 100 ppm or more, more preferably 300 to 50,000 ppm of the monomer. Such addition of the modifier can suppress a secondary reaction between polymer chains having an active terminal and impurities and the like contained in the polymerization system, and enables successful control of the reaction.

A polymerization terminator, such as an alcohol such as methanol or isopropanol or water, and the like are preferably added to the active terminals of the conjugated diene polymer prepared through the polymerization or residual active terminals which can be left after the reactions with the coupling agent and the modifier, as needed, to deactivate unreacted active terminals.

An antioxidant such as a phenol-based stabilizer, a phosphorus-based stabilizer, or a sulfur-based stabilizer may be added, as desired, to the solution of the conjugated diene polymer prepared by the above method. The amount of the antioxidant to be added may be appropriately determined according to the type thereof or the like. Furthermore, an extender oil may be compounded as desired to prepare an oil extended rubber. Examples of the extender oil include petroleum-based softening agents such as paraffin-based, aromatic-based, and naphthene-based softening agents, plant-derived softening agents, fatty acids, and the like. If a petroleum-based softening agent is used, the content of polycyclic aromatic compounds extracted by the method of IP346 (the test method specified by THE INSTITUTE of PETROLEUM, UK) is preferably less than 3%. If the extender oil is used, the amount thereof to be used is usually 5 to 100 parts by weight relative to 100 parts by weight of the conjugated diene polymer.

For example, the conjugated diene polymer thus prepared is separated from the reaction mixture by removing the solvent by any method such as steam stripping or heating of the mixed solution under reduced pressure. Thereby, a solid conjugated diene polymer can be obtained.

Two or more conjugated diene polymers having different monomer compositions, different molecule structures, different molecular weight distribution curves, and the like may be mixed to prepare the conjugated diene polymer according to the present invention, as desired. In mixing of the two or more conjugated diene polymers, the two or more

conjugated diene polymers may be mixed in the form of polymer solutions, or may be mixed in the form of solids. Preferred is mixing of the two or more conjugated diene polymers in the form of solutions. Specifically, it is more preferred that two or more solutions of conjugated diene polymers be separately prepared, and the solutions be mixed.

<Rubber composition>

The rubber composition according to the present invention is a composition comprising the conjugated diene polymer according to the present invention described above, and a filler.

The rubber composition according to the present invention may contain other polymers than the above-mentioned conjugated diene polymer according to the present invention. Examples of the other polymers include natural rubbers (these may be reformed natural rubbers such as epoxidized natural rubber (ENR), hydrogenated natural rubber (HNR), deproteinized natural rubbers (DPNR), high purity natural rubbers (UPNR), grafted natural rubbers), polyisoprene rubbers, emulsion polymerized styrene-butadiene copolymer rubbers, solution polymerized styrene-butadiene copolymer rubbers, polybutadiene rubber (those may be high-cis BR or low-cis BR, or may be polybutadiene rubbers containing crystal fibers made of a 1,2-polybutadiene polymer), styrene-isoprene copolymer rubbers, butadiene-isoprene copolymer rubbers, styrene-isoprene-butadiene copolymer rubbers, acrylonitrile-butadiene copolymer rubbers, acrylonitrile-styrene-butadiene copolymer rubbers, butyl rubbers (IIR), ethylene-propylene copolymers, chloroprene rubbers, nitrile chloroprene rubbers, nitrile isoprene rubbers, and the like, and exclude the above-mentioned conjugated diene polymers. Among these, preferred are natural rubbers, polyisoprene rubbers, polybutadiene rubbers, and solution polymerized styrene-butadiene copolymer rubbers, and more preferred are natural rubber. More preferred are natural rubbers. These polymers may be used alone or in combination, such as a combination of a natural rubber and a polybutadiene rubber or that of a natural rubber and a styrene-butadiene copolymer rubber.

In the rubber composition according to the present invention, the conjugated diene polymer according to the present invention occupies preferably 10 to 100% by weight, particularly preferably 50 to 100% by weight of the polymer ingredients in the rubber composition. When the conjugated diene polymer according to the present invention is present in the polymer ingredients in such a proportion, the rubber composition can have higher processability, and a cross-linked rubber having wear resistance and fuel efficiency in a better balance can be obtained.

Examples of the filler include silica, calcium silicate, aluminum silicate, carbon black, calcium carbonate, talc, aluminum hydroxide, alumina, clay, mica, and the like. Among these, preferred are carbon black and silica, more preferred is silica because a cross-linked rubber having further enhanced wear resistance can be obtained. These may be used alone or in combination.

Examples of silica include dry white carbon, wet white carbon, colloidal silica, precipitated silica, calcium silicate, aluminum silicate, and the like. Among these, preferred is wet white carbon containing hydrous silicic acid as the main component. A carbon-silica dual phase filler comprising carbon black and silica carried on the surface thereof may also be used. These silicas may be used alone or in combination. The nitrogen adsorption specific surface area (measured by the BET method according to ASTM D3037-81) of the silica to be used is preferably 20 to 400 $m^2/g$, more preferably 50 to 220 $m^2/g$, particularly preferably 80 to 170 $m^2/g$. The silica preferably has a pH of 5 to 10.

As the silica, a variety of commercially available silicas can be used, for example. Examples thereof include "Hi-Sil210", "Hi-Sil233", and "Hi-Sil243LD" available from PPG Industries; "Zeosil 1115MP", "Zeosil 1165MP", and "Zeosil 165GR" available from Solvay S.A.; "ULTRASIL VN2", "ULTRASIL VN3", "ULTRASIL 7000GR", and "ULTRASIL 9100GR" available from EVONIK AG; "NIPSIL VN3", "NIPSIL AQ", "NIPSIL ER", and "NIPSIL RS-150" available from TOSOH SILICA CORPORATION; and the like.

Examples of carbon blacks include furnace black, acetylene black, thermal black, channel black, and graphite. Examples of channel black include EPC, MPC, and CC. Examples of furnace carbon black include SAF, ISAF, HAF, MAF, FEF, SRF, GPF, APF, FF, CF, SCF, and ECF. Examples of thermal black include FT and MT. These carbon blacks can be used alone or in combination.

The amount of the filler to be compounded with the rubber composition according to the present invention is preferably 10 to 250 parts by weight, more preferably 15 to 150 parts by weight, still more preferably 20 to 130 parts by weight relative to 100 parts by weight of the polymer ingredients in the rubber composition. By controlling the amount of the filler to be compounded within the ranges above, a cross-linked rubber having further improved fuel efficiency can be obtained while sufficient processability of the rubber composition is ensured.

To obtain a cross-linked rubber having further improved fuel efficiency, the rubber composition according to the present invention may be further compounded with a silane coupling agent. The silane coupling agent is not particularly limited, and a variety of silane coupling agents can be used. In the present invention, sulfide-based, mercapto-based, protected mercapto-based (such as those having a carbonylthio group), thiocyanate-based, vinyl-based, amino-based, methacrylate-based, glycidoxy-based, nitro-based, epoxy-based, or chloro-based silane coupling agents can be suitably used. Specific examples of silane coupling agents include bis(3-(triethoxysilyl)propyl)disulfide, bis(3-triethoxysilylpropyl)trisulfide, bis(3-(triethoxysilyl)propyl)tetrasulfide, γ-mercaptopropyltriethoxysilane, 3-[ethoxybis(3,6,9,12,15-pentaoxaoctacosan-1-yloxy)silyl]-1-propanethiol, 3-octanoylthio-1-propyl-triethoxysilane, 3-trimethoxysilylpropyl-N,N-dimethylthiocarbamoyl tetrasulfide, γ-trimethoxysilylpropylbenzothiazyl tetrasulfide, 3-trimethoxysilylpropylbenzothiazole tetrasulfide, 3-thiocyanate propyltriethoxysilane, vinyltriethoxysilane, N-(β-aminoethyl)-γ-aminopropyltrimethoxysilane, 3-trimethoxysilylpropyl methacrylate monosulfide, γ-glycidoxypropyltriethoxysilane, 3-nitropropyltrimethoxysilane, β-(3,4-epoxycyclohexyl)ethyltrimethoxysilane, 3-chloropropyltrimethoxysilane, and the like. NXT-Z100, NXT-Z30, NXT-Z45, NXT-Z60, NXT-Z45, and NXT available from Momentive Performance Materials Inc., and Si69, Si75, and VP Si363 available from Evonick Degussa AG can also be used. These silane coupling agents may be used alone or in combination. One or two or more of these silane coupling agents may be preliminarily formed into an oligomer, and may be used in the oligomer form. The amount of the silane coupling agent to be compounded is preferably 0.1 to 30 parts by weight, more preferably 1 to 15 parts by weight relative to 100 parts by weight of the filler.

Preferably, the rubber composition according to the present invention further contains a cross-linking agent. Examples of the cross-linking agent include sulfur, sulfur-containing compounds such as halogenated sulfur, organic peroxides, quinone dioximes, organic polyvalent amine compounds, alkyl phenol resins having a methylol group, and the like. Among these, sulfur is preferably used. The amount of the cross-linking agent to be compounded is preferably 0.1 to 15 parts by weight, more preferably 0.5 to 5 parts by weight, particularly preferably 1 to 4 parts by weight relative to 100 parts by weight of the polymer ingredients in the rubber composition.

Furthermore, besides the ingredients described above, the rubber composition according to the present invention can be compounded with compounding agents such as a cross-linking accelerator, a cross-linking activator, an antioxidant, an activating agent, a process oil, a plasticizer, a lubricant, and a tackifier according to the normal method.

If sulfur or a sulfur-containing compound is used as the cross-linking agent, use in combination with a cross-linking accelerator and a cross-linking activator is preferred. Examples of the cross-linking accelerator include sulfenamide-based cross-linking accelerators; guanidine-based cross-linking accelerators; thiourea-based cross-linking accelerators; thiazole-based cross-linking accelerators; thiuram-based cross-linking accelerators; dithiocarbamic acid-based cross-linking accelerators; xanthic acid-based cross-linking accelerators; and the like. Among these, preferred are those containing sulfenamide-based cross-linking accelerators. These cross-linking accelerators are used alone or in combination. The amount of the cross-linking accelerator to be compounded is preferably 0.1 to 15 parts by weight, more preferably 0.5 to 5 parts by weight, particularly preferably 1 to 4 parts by weight relative to 100 parts by weight of the polymer ingredients in the rubber composition.

Examples of the cross-linking activator include higher fatty acids such as stearic acid; zinc oxide; and the like. These cross-linking activators are used alone or in combination. The amount of the cross-linking activator to be compounded is preferably 0.05 to 20 parts by weight, particularly preferably 0.5 to 15 parts by weight relative to 100 parts by weight of the polymer ingredients in the rubber composition.

To obtain the rubber composition according to the present invention, the ingredients can be kneaded according to an ordinary method. For example, the target composition can be obtained by kneading ingredients excluding thermally unstable ingredients such as the cross-linking agent and the cross-linking accelerator with the conjugated diene polymer, and then mixing the thermally unstable ingredients such as the cross-linking agent and the cross-linking accelerator with the kneaded product. The kneading temperature during kneading of the ingredients excluding the thermally unstable ingredients with the conjugated diene polymer is preferably 80 to 200°C, more preferably 120 to 180°C, and the kneading time is preferably 30 seconds to 30 minutes. The kneaded product is mixed with the thermally unstable ingredients after it is cooled to usually 100°C or less, preferably 80°C or less.

<Cross-linked rubber>

The cross-linked rubber according to the present invention is prepared by cross-linking the above-mentioned rubber composition according to the present invention.

The cross-linked rubber according to the present invention can be produced using the rubber composition according to the present invention, for example, by shaping the rubber composition with a molding machine corresponding to a desired shape, such as an extruder, an injection molding machine, a press, or a roll, and performing a cross-linking reaction by heating to provide a cross-linked rubber having a fixed shape. In this case, the rubber composition may be preliminarily shaped and then cross-linked, or may be shaped and cross-linked at the same time. The shaping temperature is usually 10 to 200°C, preferably 25 to 120°C. The cross-linking temperature is usually 100 to 200°C, preferably 130 to 190°C, and the cross-linking time is usually 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking.

As a heating method, a common method used to cross-link rubber, such as press heating, steam heating, oven heating, or hot air heating, can be appropriately selected.

The cross-linked rubber according to the present invention thus prepared has excellent fuel efficiency and high wear resistance because it is prepared using the above-mentioned conjugated diene polymer according to the present invention. For this reason, owing to its excellent properties, the cross-linked rubber according to the present invention can be used in a variety of applications to parts of tires such as cap treads, base treads, carcasses, sidewalls, and bead parts; materials for industrial products such as hoses, belts, mats, and antivibration rubbers; impact resistance improvers for resins; resin film buffer agents; shoe soles; rubber shoes; golf balls; toys; and the like, for example, inter alia, cross-linked rubber according to the present Especially, because of its excellent fuel efficiency and high wear resistance, the cross-linked rubber according to the present invention is suitable for materials for tires.

EXAMPLES

Hereinafter, the present invention will be described based on more detailed examples, but the present invention is not limited to these examples. Note that, in the examples, "parts" and "%" are based on weight unless otherwise specified. Tests and evaluations conformed to the followings.

<Styrene unit content, vinyl bond amount>

The styrene unit content (% by weight) and the vinyl bond content (mol%) of conjugated diene monomer units were determined according to JIS K6239 (2007) by $^{1}$H-NMR.

<Proportion of styrene blocks>

The proportion of styrene blocks as the proportion of aromatic vinyl monomer blocks was measured by $^{1}$H-NMR using deuterochloroform as a solvent with reference to the reference shown below. In the resulting $^{1}$H-NMR spectrum, peaks within 6.1 to 7.7 ppm were regarded as peaks derived from styrene, and those within 6.1 to 6.88 ppm were regarded as peaks derived from styrene blocks. The ratio of the peak area derived from styrene blocks to the peak area derived from styrene was determined, and the value was multiplied by 2.5 and expressed in percentage. The percentage was regarded as the proportion of styrene blocks.
Reference: Sardelis, K. Michels, H. J. Allen, G. Polymer, 1984, 25, 1011

<Mooney viscosity of conjugated diene polymer>

The Mooney viscosity (ML1+4) of the conjugated diene polymer was measured according to JIS K 6300-1:2013 under the following conditions:

- test temperature: 100°C
- type of rotor: L-shaped
- tester used: SHIMADZU Mooney Viscometer SMV-300J available from SHIMADZU Corporation

<Silicon content>

The silicon content was determined from X-ray fluorescence measurement of press molded sheets prepared by press molding conjugated diene polymers (A) to (L). The conditions of press molding and those of X-ray fluorescence measurement were set as follows.

(Conditions of press molding)

Using a press molding machine (type: AYSR-10) available from Sinto Metal Industries, Ltd., each conjugated diene polymer was heated for 5 minutes at a temperature of 150°C without pressure applied, and then pressed for 5 minutes under pressure by heating at a temperature of 150°C and a maximum pressure of 5 MPa. This operation was repeated 20 times, and then the conjugated diene polymer was quenched and cool pressed at a temperature of 25°C without pressure applied. Thus, press molded sheets (diameter: 25 mm, thickness: 30 mm) were prepared. To prevent contact between the conjugated diene polymers (A) to (L) and a metal, press molding was performed while the mold used was covered with a PTFE film (NAELON tape TOMBO9001, available from NICHIAS Corporation).

(Conditions of X-ray fluorescence measurement)

An X-ray fluorescence spectrometer (ZSX PrimusI I, available from Rigaku Corporation) was used in X-ray

fluorescence measurement. Each press molded sheet was set on a sample holder, and a film (Ultra-Polyester, thickness: 1.5 μm, available from Chemplex Industries) was applied onto the surface to be measured. The prepared sample was subjected to X-ray fluorescence analysis under the conditions below, and the silicon content was determined based on the calibration curve below:

(i) Conditions of measurement: X-ray tube Rh 30 kV, 100 mA, aperture: ϕ20 mm
(ii) Measurement atmosphere: vacuum
(iii) Calibration curve

Polyethylen Reference Materials (RRM-PE-01, available from Rigaku Corporation) were used as calibration curve standard samples. Standard samples containing 82 weight ppm, 544 weight ppm, and 808 weight ppm of silicon were subjected to X-ray fluorescence analysis, and a primary calibration curve was created.

<Ionic strength index>

For each of the conjugated diene polymers (A) to (L), the ionic strength index was determined as follows: GPC measurement using a styrene-based column and GPC measurement using a cation exchange column were performed on a sample solution containing the conjugated diene polymer and an internal standard polystyrene. Based on these results, the ionic strength index was calculated from Expression (I) below:

$$\text{ionic strength index (\%)} = \{1 - (A_{CX}/B_{CX}) \times (B_{sty}/A_{sty})\} \times 100 \quad (I)$$

$A_{CX}$: The peak area of the molecular weight distribution curve of the conjugated diene polymer obtained by GPC measurement using a cation exchange column
$B_{CX}$: The peak area of the peak of the internal standard polystyrene obtained by GPC measurement using a cation exchange column
$B_{sty}$: The peak area of the peak of the internal standard polystyrene obtained by GPC measurement using a styrene-based column
$A_{sty}$: The peak area of the molecular weight distribution curve of the conjugated diene polymer obtained by GPC measurement using a styrene-based column

Here, in the definitions of $A_{CX}$ and $A_{sty}$, the molecular weight distribution curve of the conjugated diene polymer indicates the molecular weight distribution curve obtained by removing a molecular weight region of less than 5000 from the resulting molecular weight distribution curve and further removing the peak of the internal standard polystyrene.
GPC measurement using a styrene-based column was performed under the conditions below.

(GPC apparatus and software)

(i) Liquid delivery pump: LC-20AD (available from SHIMADZU Corporation)
(ii) Degasser: DGU-20A3 (available from SHIMADZU Corporation)
(iii) Autosampler: SIL-20A HT(available from SHIMADZU Corporation)
(iv) Column oven: CTO-20A (available from SHIMADZU Corporation)
(v) Differential refractive index detector (RID): RID-10A (available from SHIMADZU Corporation)
(vi) System controller: CBM-20A (available from SHIMADZU Corporation)
(vii) Measurement and analysis software: LC solution ver. 1.24 SP1
(viii) Measurement conditions

GPC columns: two PlusPore series Poly Pore columns (7.5 mm I.D. × 300 mm) (available from Agilent Technologies, Inc.)
Mobile phase: 25 mg of 2-(ethylamino)ethanol (available from FUJIFILM Wako Chemical Corporation, special grade) was added to 3L of tetrahydrofuran (available from Kanto Chemical Co., Inc., special grade, stabilizer free).
Flow rate: 1 mL/min
Column oven temperature: 35°C
Detection: differential refractive index detector (RID)
RID cell temperature: 35°C

Sample solution injection amount: 100 μL
Standard substances for the calibration of the GPC column: PStQuick Kit-H (available from Tosoh Corporation)

(ix) Sample solution preparing conditions

Solvent: 5 mg of standard polystyrene A5000 having a molecular weight of 5000 (available from Tosoh Corporation) as an internal standard was added to 20 mL of tetrahydrofuran (available from KANTO CHEMICAL CO., INC., Super grade, stabilizer free).
Sample solution concentration: 0.5 mg/mL
Dissolving auto-agitator: DF-8020 (available from Tosoh Corporation)
Dissolution conditions: 10 mg of a sample and 20 mL of the solvent were added into a screw vial, and sealed tightly to be stirred at a stirring speed of 60 reciprocations/min at room temperature for 120 minutes by DF-8020. Filtration was performed by a syringe equipped with a filtering filter.
Filtering filter: Millex-LG, pore size of 0.45 μm, hydrophilic, PTFE, filter diameter of 25 mm (available from Merck KGaA)

GPC measurement using a cation exchange column was performed under the conditions below. The same solution for measurement used in the GPC measurement using a styrene-based column was used in the GPC measurement using a cation exchange column.

(GPC apparatus and software)

(i) Liquid delivery pump: LC-20AD (available from SHIMADZU Corporation)
(ii) Degasser:DGU-20A3 (available from SHIMADZU Corporation)
(iii)Autosampler: SIL-20A HT (available from SHIMADZU Corporation)
(iv) Column oven: CTO-20A (available from SHIMADZU Corporation)
(v) Differential refractive index detector (RID): RID-10A (available from SHIMADZU Corporation)
(vi) System controller: CBM-20A (available from SHIMADZU Corporation)
(vii) Measurement and analysis software: LC solution ver. 1.24 SP1
(viii) Measurement conditions

GPC columns: two Inertcil CX columns (4.6 × 250 mm, available from GL Sciences Inc.)
Mobile phase: tetrahydrofuran (available from KANTO CHEMICAL CO., INC., Super grade, stabilizer free)
Flow rate: 0.7 mL/min
Column oven temperature: 35°C
Detection: differential refractive index detector (RID)
RID cell temperature: 35°C
Sample solution injection amount: 100 μL
Standard substances for the calibration of the GPC column: PStQuick Kit-H (available from Tosoh Corporation)

(ix) Sample solution preparing conditions

Solvent: 5 mg of standard polystyrene A5000 having a molecular weight of 5000 (available from Tosoh Corporation) as an internal standard was added to 20 mL of tetrahydrofuran (available from KANTO CHEMICAL CO., INC., Super grade, stabilizer free).
Sample solution concentration: 0.5 mg/mL
Dissolving auto-agitator: DF-8020 (available from Tosoh Corporation)
Dissolution conditions: 10 mg of a sample and 20 mL of the solvent were added into a screw vial, and sealed tightly to be stirred at a stirring speed of 60 reciprocations/min at room temperature for 120 minutes by DF-8020. Filtration was performed by a syringe equipped with a filtering filter.
Filtering filter: Millex-LG, pore size of 0.45μm, hydrophilic, PTFE, filter diameter 25 mm (available from Merck KGaA)

<Weight average molecular weight (Mw), molecular weight distribution (Mw/Mn), number of peaks in molecular weight distribution curve, and peak top molecular weights of peaks>

For each of the conjugated diene polymers (A) to (L), the molecular weight distribution curve of the conjugated diene polymer was obtained by performing GPC measurement using a styrene-based column on a sample solution containing the conjugated diene polymer and internal standard polystyrene as in the measurement of the ionic strength index described above. Based on the molecular weight distribution curve of the conjugated diene polymer, the weight average molecular weight (Mw) and the molecular weight distribution (Mw/Mn) were determined. To be noted, the weight average molecular weight (Mw) and the number average molecular weight (Mn) were determined against polystyrene standards. Moreover, the obtained molecular weight distribution curve of the conjugated diene polymer was divided into regions in each of which both ends were defined by the base line or minimum values and each of which had one maximum value, and the peak areas of the regions were determined. The number of regions having a peak area of 1% or more was determined as the number of peaks of molecular weight, where the entire peak area of the molecular weight distribution curve of the conjugated diene polymer was 100%. Furthermore, among the peaks of the divided regions (limited to the regions having a peak area of 1% or more), a peak in a region of the lowest molecular weight was defined as a first peak, and peaks after the first peak were sequentially defined as a second peak, a third peak, and the like from the lower molecular weight side. The peak top molecular weights of the peaks (molecular weight indicating the maximum value in each region) were determined.

<Processability (gloss of sheet)>

Surfaces of rubber composition sheets after primary kneading were visually observed, and were evaluated by ranking those having strong gloss as "a", those having weak gloss as "b", and those having no gloss as "c". Stronger gloss of the rubber composition sheet after primary kneading indicates higher processability of the conjugated diene polymer.

<Processability (crack of sheet edge)>

Sheet edges of rubber composition sheets after primary kneading were visually observed, and were evaluated by ranking smooth sheet edges without crack as "a", irregular sheet edges without crack as "b", and sheet edges with crack as "c". A rubber composition sheet after primary kneading having less crack of the sheet edge indicates higher processability of the conjugated diene polymer.

<Processability (dispersion of silica)>

An uncross-linked rubber composition was processed into about 5 g of a test piece of a 3-cm square. The test piece was preheated at 100°C for 4 minutes, and was measured for the storage modulus G‘ at dynamic distortions of 0.7% and 42% using PREMIER RPA (available from ALPHA TECHNOLOGIES) at a temperature of 40°C and a frequency of 10 Hz. The difference (ΔG’) between the storage modulus G’ at a dynamic distortion of 0.7% and the storage modulus G’ at a dynamic distortion of 42% was calculated. For each difference (ΔG’) in the storage modulus G’ in Examples and Comparative Examples, the index was calculated where the difference (ΔG’) in the storage modulus G’ in Example 1 was 100, and was defined as the value of the processability (dispersion of silica). A greater value of the processability (dispersion of silica) indicates that silica contained in the uncross-linked rubber composition is more favorably dispersed, and thus the conjugated diene polymer has higher processability.

<Fuel efficiency>

A cross-linked rubber sheet was punched into a strip having a thickness of 2 mm and a length of 40 mm to prepare a test piece. Using a rheometer (available from Ueshima Seisakusho Co., Ltd.), the loss tangent (tanδ (60°C)) of the obtained test piece was measured at a frequency of 10 Hz, an initial elongation of 10%, a distortion amplitude of 2%, and a temperature of 60°C. For each loss tangent (tanδ (60°C)) in Examples and Comparative Examples, an index was calculated where the loss tangent (tanδ(60°C)) in Example 1 was 100, and was defined as the value of fuel efficiency. A greater value of fuel efficiency indicates that a cross-linked rubber thereof has more excellent fuel efficiency.

<Wear resistance>

A cross-linked rubber sheet was subjected to a DIN wear test specified in JIS K6264-2 (2005) to measure the specific wear volume. For each specific wear volume in Examples and Comparative Examples, an index was calculated

where the specific wear volume in Example 2 was 100, and was defined as the value of wear resistance. A greater value of wear resistance indicates higher wear resistance of a cross-linked rubber thereof.

<Preparation of polymer block (A) having active terminal>

140.8 g of cyclohexane and 3.0 mmol of tetramethylethylenediamine were added to a 800-ml vessel purged with nitrogen, and 30.0 mmol of normal butyllithium was further added. Subsequently, 113.6 g of isoprene and 9.2 g of styrene were slowly added, and these materials were reacted in the vessel at 50°C for 120 minutes to yield a polymer block (A) having an active terminal. The weight average molecular weight (Mw) of the resulting polymer block (A) was 6,500, the molecular weight distribution (Mw/Mn) was 1.10, the content of styrene monomer units was 7.5% by weight, the content of isoprene monomer units was 92.5% by weight, and the vinyl bond content was 7.0 mol%.

<Production Example 1>

Under a nitrogen atmosphere, 7956 g of industrial hexane (available from Sumitomo Chemical Co., Ltd., trade name: Hexane (general product), density: 0.68 g/mL), 1014 g of cyclohexane, 3.08 mmol of tetramethylethylenediamine, 425 g of 1,3-butadiene, 680 g of styrene, and 4.27 mmol of piperidine were placed into an autoclave having an inner volume of 20 L and equipped with a stirrer. A small amount of normal butyllithium as a scavenger was charged into the autoclave in order to preliminarily detoxify impurities which would act to deactivate polymerization, and then 4.27 mmol of normal butyllithium was charged to start polymerization at 55°C. After the polymerization reaction was continued for 15 minutes, 595 g of 1,3-butadiene was continuously added over 85 minutes. Subsequently, after it was verified that the polymerization conversion ratio reached a range of 95% to 100% and 10 minutes had passed, a polyorganosiloxane represented by Formula (13) below was added in an amount providing an epoxy group content of 3.42 mmol, and was reacted for 20 minutes. Subsequently, 2 equivalents of methanol as a polymerization terminator was added relative to the total lithium amount in the autoclave to prepare a solution containing a conjugated diene polymer. 0.20 Parts of 2,4-bis(octylthiomethyl)-6-methylphenol (available from RIANOX, trade name: RIANOX 1520) as an antioxidant was added to the solution relative to 100 parts of the conjugated diene polymer to prepare a polymer solution.

[Chem. 8]

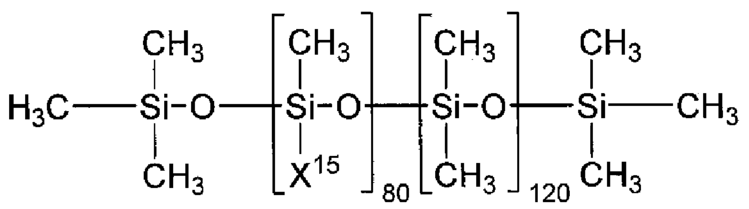

(13)

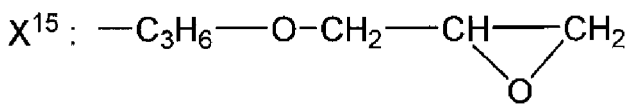

<Production Example 2>

Under a nitrogen atmosphere, 7956 g of industrial hexane, 1014 g of cyclohexane, 2.63 mmol of tetramethylethylenediamine, 425 g of 1,3-butadiene, and 680 g of styrene were placed into an autoclave having an inner volume of 20 L and equipped with a stirrer. A small amount of normal butyllithium as a scavenger was charged into the autoclave in order to preliminarily detoxify impurities which would act to deactivate polymerization, and then 4.38 mmol of the polymer block (A) having an active terminal in terms of the lithium atom content was added to allow the polymer growth reaction to proceed at 55°C. After the polymerization reaction was continued for 15 minutes, 595 g of 1,3-butadiene was continuously added over 85 minutes. Subsequently, after it was verified that the polymerization conversion ratio reached a range of 95% to 100%, 1.2 mmol of normal butyllithium was added. Furthermore, after 10 minutes had passed, the polyorganosiloxane represented by Formula (13) above was added in an amount providing an epoxy group content of 3.42 mmol, and was reacted for 20 minutes. Subsequently, 2 equivalents of methanol as a polymerization terminator was added relative to the total lithium amount in the autoclave to prepare a solution containing a conjugated diene polymer. To this solution, 0.20 parts of 2,4-bis(octylthiomethyl)-6-methylphenol as an antioxidant was added relative to

100 parts of the conjugated diene polymer to prepare a polymer solution.

<Production Example 3>

Under a nitrogen atmosphere, 9180 g of industrial hexane, 1170 g of cyclohexane, 5.2 mmol of tetramethylethylenediamine, 500 g of 1,3-butadiene, and 800 g of styrene were placed into an autoclave having an inner volume of 20 L and equipped with a stirrer. A small amount of normal butyllithium as a scavenger was charged into the autoclave in order to preliminarily detoxify impurities which would act to deactivate polymerization, and then 20.0 mmol (in terms of lithium atom content) of the polymer block (A) having an active terminal prepared above was added to allow the polymer growth reaction to proceed at 55°C. After the polymerization reaction was continued for 15 minutes, and 700 g of 1,3-butadiene was continuously added over 75 minutes. Subsequently, after it was verified that the polymerization conversion ratio reached a range of 95% to 100% and 10 minutes had passed, the polyorganosiloxane represented by Formula (13) above was added in an amount providing an epoxy group content of 12 mmol, and was reacted for 20 minutes. Then, 20 mmol of 3-(2-aminoethylamino)propyl trimethoxy silane was added, and was reacted for 15 minutes. Subsequently, 2 equivalents of methanol as a polymerization terminator was added relative to the total lithium amount in the autoclave to prepare a solution containing a conjugated diene polymer. To this solution, 0.20 parts of 2,4-bis(octylthiomethyl)-6-methylphenol as an antioxidant was added relative to 100 parts of the conjugated diene polymer to prepare a polymer solution.

<Production Example 4>

Under a nitrogen atmosphere, 9180 g of industrial hexane, 1170 g of cyclohexane, 5.06 mmol of tetramethylethylenediamine, 400 g of 1,3-butadiene, and 560 g of styrene were placed into an autoclave having an inner volume of 20 L and equipped with a stirrer. A small amount of normal butyllithium as a scavenger was charged into the autoclave in order to preliminarily detoxify impurities which would act to deactivate polymerization, and then 8.03 mmol (in terms of lithium atom content) of the polymer block (A) having an active terminal prepared above was added to allow the polymer growth reaction to proceed at 45°C. After the polymerization reaction was continued for 20 minutes, 544 g of 1,3-butadiene and 96 g of styrene were continuously added over 82 minutes and 60 minutes, respectively. When 55 minutes had passed from the start of the chain-growth polymerization, 0.55 mmol of 1,6-bis(trichlorosilyl)hexane as a coupling agent was added. After 5 minutes had passed from the addition of 1,6-bis(trichlorosilyl)hexane, 1.02 g of bis(diethylamino)methylvinylsilane and 2.90 mmol (in terms of lithium atom content) of the polymer block (A) having an active terminal prepared above were added. Subsequently, after it was verified that the polymerization conversion ratio reached a range of 95% to 100% and 10 minutes had passed, the polyorganosiloxane represented by Formula (13) above was added in an amount providing a total epoxy group content of 11.45 mmol. The reaction time after each addition was 10 minutes. Subsequently, 25.7 mmol of normal butyllithium was added, and was reacted for 10 minutes. Thereafter, the polyorganosiloxane represented by Formula (13) above was added in an amount providing an epoxy group content of 8.09 mmol, and was reacted for 10 minutes. Subsequently, 2 equivalents of methanol as a polymerization terminator was added relative to the total lithium amount in the autoclave to prepare a solution containing a conjugated diene polymer. To this solution, 0.20 parts of 2,4-bis(octylthiomethyl)-6-methylphenol as an antioxidant was added relative to 100 parts of the conjugated diene polymer to prepare a polymer solution.

<Production Example 5>

Under a nitrogen atmosphere, 9180 g of industrial hexane, 1170 g of cyclohexane, 5.2 mmol of tetramethylethylenediamine, 500 g of 1,3-butadiene, 800 g of styrene, and 0.43 g of bis(diethylamino)methylvinylsilane were placed into an autoclave having an inner volume of 20 L and equipped with a stirrer. A small amount of normal butyllithium as a scavenger was charged into the autoclave in order to preliminarily detoxify impurities which would act to deactivate polymerization, and then 20.0 mmol (in terms of lithium atom content) of the polymer block (A) having an active terminal prepared above was added to allow the polymer growth reaction to proceed at 55°C. After the polymerization reaction was continued for 15 minutes, 0.86 g of bis(diethylamino)methylvinylsilane was added, and 700 g of 1,3-butadiene was continuously added over 75 minutes. Subsequently, after it was verified that the polymerization conversion ratio reached a range of 95% to 100% and 10 minutes had passed, the polyorganosiloxane represented by Formula (13) above was added in an amount providing an epoxy group content of 12 mmol, and was reacted for 20 minutes. Subsequently, 2 equivalents of methanol as a polymerization terminator was added relative to the total lithium amount in the autoclave to prepare a solution containing a conjugated diene polymer. To this solution, 0.20 parts of 2,4-bis(octylthiomethyl)-6-methylphenol as an antioxidant was added relative to 100 parts of the conjugated diene polymer to prepare a polymer solution.

<Production Example 6>

A polymer solution was prepared through the same operation as that in Production Example 1 except that the polyorganosiloxane represented by Formula (13) above was not added.

<Production Example 7>

Under a nitrogen atmosphere, 7650 g of industrial hexane, 2925 g of cyclohexane, 8.81 mL of tetrahydrofuran, 0.88 mL of ethylene glycol dibutyl ether, 248 g of 1,3-butadiene, and 526 g of styrene were placed into an autoclave having an inner volume of 20 L and equipped with a stirrer. A small amount of normal butyllithium as a scavenger was charged into the autoclave in order to preliminarily detoxify impurities which would act to deactivate polymerization, and then 3.16 mmol of normal butyllithium was added to start polymerization at 43°C. After the polymerization reaction was continued for 20 minutes, 680 g of 1,3-butadiene and 93 g of styrene were continuously added over 200 minutes and 55 minutes, respectively. Subsequently, after it was verified that the polymerization conversion ratio reached a range of 95% to 100% and 10 minutes had passed, 0.31 mmol of silicon tetrachloride was added, and was reacted for 30 minutes. Subsequently, 1.5 equivalents of methanol as a polymerization terminator was added relative to the total lithium amount in the autoclave to prepare a solution containing a conjugated diene polymer. To this solution, 0.40 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) and 0.20 parts of pentaerythrityltetrakis(3-laurylthiopropionate) (available from Sumitomo Chemical Co., Ltd., trade name: Sumilizer TP-D) as antioxidants were added relative to 100 parts of the conjugated diene polymer to prepare a polymer solution.

<Production Example 8>

A polymer solution was prepared through the same operation as that in Production Example 2 except that 1.2 mmol of normal butyllithium and the polyorganosiloxane represented by Formula (13) above were not added.

<Production Example 9>

A polymer solution was prepared through the same operation as that in Production Example 5 except that the amount of tetramethylethylenediamine was changed to 5.37 mmol and the polyorganosiloxane represented by Formula (13) above was not added.

<Production Example 10>

A polymer solution was prepared through the same operation as that in Production Example 1 except that 1.83 g of
bis(diethylamino)methylvinylsilane was charged after 15 minutes had passed from the start of polymerization and 6.41 mmol of [3-(diethylamino)propyl]trimethoxysilane, rather than the polyorganosiloxane represented by Formula (13) above, was added, and was reacted for 15 minutes.

[Examples 1 to 8 and Comparative Examples 1 to 4]

The polymer solutions prepared in Production Examples 1 to 10 and an oil (available from NIPPON OIL CORPORATION, trade name "AROMAX T-DAE") were mixed such that the mass of the conjugated diene polymer contained in the polymer solution and the mass of the oil were in the proportions shown in Table 1, and were homogeneously mixed by stirring. Thereafter, the solvent was removed by steam stripping, and the residues were dried in a vacuum dryer set at 60°C for 24 hours to prepare conjugated diene polymers (A) to (L). The resulting conjugated diene polymers (A) to (L) were measured for the styrene unit content, the vinyl bond amount, the proportion of styrene blocks, the Mooney viscosity, the silicon content, the ionic strength index, the weight average molecular weight (Mw), the molecular weight distribution (Mw/Mn), the number of peaks in the molecular weight distribution curve, and the peak top molecular weights of peaks. The results are shown in Table 1.

In a Labo Plastomill having a volume of 250 mL, the conjugated diene polymers (A) to (L) in Examples 1 to 8 and Comparative Examples 1 to 4 were each masticated for 30 seconds. In the next step, materials other than sulfur and a vulcanization accelerator were added in the compounding proportions (parts by mass) shown in Table 2, followed by further kneading for 3.5 minutes. The rubber compositions after primary kneading were discharged from the Labo Plastomill. When the compositions were discharged, the Labo Plastomill showed a temperature of 140°C. The resulting rubber compositions after primary kneading were passed through an open roll mill having a gap width of 1.5 mm and

set at a temperature of 50°C two times to prepare rubber composition sheets after primary kneading. The resulting rubber composition sheets after primary kneading were evaluated for the processability (gloss of sheet) and the processability (crack of sheet edge). The results are shown in Table 2.

Next, the rubber composition sheets after primary kneading were each wound around the open roll mill set at 50°C, and sulfur and a vulcanization accelerator were added. These were mixed to prepare uncross-linked rubber compositions in the form of a sheet. The resulting uncross-linked rubber compositions were evaluated for the processability (dispersion of silica). The results are shown in Table 2.

The resulting uncross-linked rubber compositions were cross-linked by heating at 160°C for 30 to 35 minutes to prepare cross-linked rubber sheets. The resulting cross-linked rubber sheets were evaluated for the fuel efficiency and the wear resistance. The results are shown in Table 2.

[Table 1]

Table 1

| | | Ex. 1 | Ex. 2 | Ex. 3 | Ex. 4 | Ex. 5 | Ex. 6 | Ex. 7 | Ex. 8 | C. Ex. 1 | C. Ex. 2 | C. Ex. 3 | C. Ex. 4 |
|---|---|---|---|---|---|---|---|---|---|---|---|---|---|
| Blending proportions (parts) | Production Example 1 | 100 | 80 | 30 | - | - | - | - | - | 50 | - | - | - |
| | Production Example 2 | - | 20 | 70 | 66.7 | - | 66.7 | - | - | - | - | - | - |
| | Production Example 3 | - | - | - | 33.3 | - | - | - | - | - | - | - | - |
| | Production Example 4 | - | - | - | - | 100 | - | 42 | 54 | - | - | - | - |
| | Production Example 5 | - | - | - | - | - | 33.3 | - | - | - | - | - | - |
| | Production Example 6 | - | - | - | - | - | - | - | - | 50 | - | - | - |
| | Production Example 7 | - | - | - | - | - | - | - | - | - | 100 | - | - |
| | Production Example 8 | - | - | - | - | - | - | - | - | - | - | 66.7 | - |
| | Production Example 9 | - | - | - | - | - | - | - | - | - | - | 33.3 | - |
| | Production Example 10 | - | - | - | - | - | - | 58 | 46 | - | - | - | 100 |
| | Oil | 20 | 20 | 20 | 20 | 20 | 20 | 20 | 20 | 20 | 37.5 | 20 | 20 |

(continued)

| | | Ex. 1 | Ex. 2 | Ex. 3 | Ex. 4 | Ex. 5 | Ex. 6 | Ex. 7 | Ex. 8 | C. Ex. 1 | C. Ex. 2 | C. Ex. 3 | C. Ex. 4 |
|---|---|---|---|---|---|---|---|---|---|---|---|---|---|
| Physical properties of conjugated diene polymer | Styrene unit content (wt%) | 40 | 40 | 40 | 40 | 41 | 40 | 41 | 41 | 41 | 40 | 40 | 41 |
| | Vinyl bond content (mol%) | 25 | 24 | 23 | 23 | 37 | 23 | 30 | 31 | 24 | 24 | 24 | 25 |
| | Proportion (%) of styrene blocks | 2.8 | 2.8 | 2.8 | 2.3 | 2.2 | 2.2 | 2.4 | 2.3 | 2.6 | 4.0 | 2.1 | 2.5 |
| | Mooney viscosity | 85 | 81 | 75 | 95 | 62 | 96 | 82 | 78 | 80 | 65 | 56 | 97 |
| | Silicon content (weight ppm) | 97 | 106 | 130 | 257 | 623 | 254 | 398 | 444 | 40 | 0 | 27 | 234 |
| | Ionic strength index (%) | 38.1 | 31.2 | 9.4 | 2.4 | 3.6 | 0.8 | 44.9 | 36 | 68.0 | 0 | 0 | 83.4 |
| | Mw ($\times 10^4$) | 88 | 81 | 90 | 82 | 63 | 79 | 72 | 71 | 75 | 110 | 43 | 67 |
| | Mw/Mn | 1.64 | 1.66 | 1.53 | 1.74 | 1.80 | 1.70 | 1.64 | 1.64 | 1.48 | 1.62 | 1.41 | 1.35 |
| | Number of peaks of molecular weight | 3 | 3 | 3 | 4 | 4 | 5 | 5 | 5 | 3 | 2 | 3 | 2 |
| | Peak top molecular weight Mw ($\times 10^4$) of first peak | 63 | 60 | 59 | 16 | 9 | 17 | 10 | 10 | 60 | 60 | 17 | 68 |
| | Peak top molecular weight Mw ($\times 10^4$) of second peak | 128 | 124 | 120 | 60 | 33 | 38 | 38 | 38 | 129 | 106 | 58 | 141 |
| | Peak top molecular weight Mw ($\times 10^4$) of third peak | 175 | 173 | 168 | 120 | 71 | 60 | 79 | 79 | 177 | - | 89 | - |
| | Peak top molecular weight Mw ($\times 10^4$) of fourth peak | - | - | - | 166 | 102 | 122 | 119 | 119 | - | - | - | - |
| | Peak top molecular weight Mw ($\times 10^4$) of fifth peak | - | - | - | - | - | 168 | 148 | 148 | - | - | - | - |
| Conjugated diene polymer | | A | B | C | D | E | F | G | H | I | J | K | L |

[Table 2]

Table 2

| | | Ex. 1 | Ex. 2 | Ex. 3 | Ex. 4 | Ex. 5 | Ex. 6 | Ex. 7 | Ex. 8 | C. Ex. 1 | C. Ex. 2 | C. Ex. 3 | C. Ex. 4 |
|---|---|---|---|---|---|---|---|---|---|---|---|---|---|
| Blending proportions (parts) | Conjugated diene polymer (A) (*) | 120 | - | - | - | - | - | - | - | - | - | - | - |
| | Conjugated diene polymer (B) (*) | - | 120 | - | - | - | - | - | - | - | - | - | - |
| | Conjugated diene polymer (C) (*) | - | - | 120 | - | - | - | - | - | - | - | - | - |
| | Conjugated diene polymer (D) (*) | - | - | - | 120 | - | - | - | - | - | - | - | - |
| | Conjugated diene polymer (E) (*) | - | - | - | - | 120 | - | - | - | - | - | - | - |
| | Conjugated diene polymer (F) (*) | - | - | - | - | - | 120 | - | - | - | - | - | - |
| | Conjugated diene polymer (G) (*) | - | - | - | - | - | - | 120 | - | - | - | - | - |
| | Conjugated diene polymer (H) (*) | - | - | - | - | - | - | - | 120 | - | - | - | - |
| | Conjugated diene polymer (I) (*) | - | - | - | - | - | - | - | - | 120 | - | - | - |
| | Conjugated diene polymer (J) (*) | - | - | - | - | - | - | - | - | - | 137.5 | - | - |
| | Conjugated diene polymer (K) (*) | - | - | - | - | - | - | - | - | - | - | 120 | - |
| | Conjugated diene polymer (L) (*) | - | - | - | - | - | - | - | - | - | - | - | 120 |
| | Silica | 80 | 80 | 80 | 80 | 80 | 80 | 80 | 80 | 80 | 80 | 80 | 80 |
| | Oil | 17.5 | 17.5 | 17.5 | 17.5 | 17.5 | 17.5 | 17.5 | 17.5 | 17.5 | 0 | 17.5 | 17.5 |
| | Silane coupling agent | 6.4 | 6.4 | 6.4 | 6.4 | 6.4 | 6.4 | 6.4 | 6.4 | 6.4 | 6.4 | 6.4 | 6.4 |
| | Carbon black | 5 | 5 | 5 | 5 | 5 | 5 | 5 | 5 | 5 | 5 | 5 | 5 |
| | Zinc oxide | 3 | 3 | 3 | 3 | 3 | 3 | 3 | 3 | 3 | 3 | 3 | 3 |
| | Antioxidant | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 |
| | Vulcanization accelerator (1) | 1.5 | 1.5 | 1.5 | 1.5 | 1.5 | 1.5 | 1.5 | 1.5 | 1.5 | 1.5 | 1.5 | 1.5 |
| | Vulcanization accelerator (2) | 2 | 2 | 2 | 2 | 2 | 2 | 2 | 2 | 2 | 2 | 2 | 2 |
| | Processability (gloss of sheet) | b | a | a | a | a | a | b | a | c | a | a | c |

(continued)

| | | Ex. 1 | Ex. 2 | Ex. 3 | Ex. 4 | Ex. 5 | Ex. 6 | Ex. 7 | Ex. 8 | C. Ex. 1 | C. Ex. 2 | C. Ex. 3 | C. Ex. 4 |
|---|---|---|---|---|---|---|---|---|---|---|---|---|---|
| Evaluations | Processability (crack of sheet edge) | a | a | a | a | a | a | b | a | a | a | a | c |
| | Processability (dispersion of silica) | 100 | 108 | 112 | 126 | 152 | 131 | 144 | 154 | 53 | 92 | 38 | 123 |
| | Fuel efficiency | 100 | 110 | 109 | 109 | 118 | 118 | 125 | 126 | 100 | 89 | 82 | 118 |
| | Wear resistance | 103 | 100 | 105 | 113 | 112 | 125 | 137 | 137 | 80 | 77 | 89 | 87 |
| (*) In the table above, the conjugated diene polymers (A) to (L) contain the oil in an amount shown in Table 1. | | | | | | | | | | | | | |

The materials shown in Table 2 are as follows.

- Silica: avaible from EVONIK AG, trade name "ULTRASIL (registered trademark) 7000GR"
- Oil: available from NIPPON OIL CORPORATION, trade name "AROMAX T-DAE"
- Silane coupling agent: bis(3-(triethoxysilyl)propyl)tetrasulfide (available from Degussa AG, trade name "Si 69")
- Carbon black: available from Cabot Japan K.K., trade name "N339"
- Zinc oxide: available from Seido Chemical Industry Co., Ltd., trade name "Zinc oxide II"
- Antioxidant: 6PPD, N-phenyl-N'-(1,3-dimethylbutyl)-p-phenylenediamine (available from Ouchi Shinko Chemical Industrial Co., Ltd., trade name "NOCRAC 6C")
- Stearic acid: available from NOF CORPORATION, trade name "BEAD STEARIC ACID CAMELLIA"
- Sulfur: available from Tsurumi Chemical Industry Co., Ltd., trade name "Sulfur 325 mesh"
- Vulcanization accelerator (1): N-cyclohexyl-2-benzothiazylsulfeneamide (available from Ouchi Shinko Chemical Industrial Co., Ltd., trade name "NOCCELER CZ-G")
- Vulcanization accelerator (2): diphenylguanidine (available from Ouchi Shinko Chemical Industrial Co., Ltd., trade name "NOCCELER D")

Tables 1 and 2 verified the followings.

Specifically, the conjugated diene polymers containing 95 weight ppm or more of silicon and having an ionic strength index of 75% or less had high processability and provided cross-linked rubbers having high wear resistance and excellent fuel consumption (Examples 1 to 8).

In contrast, in the case where the silicon content was less than 95 weight ppm or the ionic strength index was more than 75%, processability of the conjugated diene polymer and wear resistance and fuel efficiency of provided cross-linked rubber were poorly balanced (Comparative Examples 1 to 4) .

## Claims

1. A conjugated diene polymer containing at least conjugated diene monomer units, wherein the conjugated diene polymer contains 95 weight ppm or more of silicon, and has an ionic strength index of 75% or less.

2. The conjugated diene polymer according to claim 1, wherein the conjugated diene polymer has a molecular weight distribution (Mw/Mn) of 1.5 or more.

3. The conjugated diene polymer according to claim 1 or 2, wherein the conjugated diene polymer has a weight average molecular weight (Mw) of 200000 or more.

4. The conjugated diene polymer according to any one of claims 1 to 3, wherein the conjugated diene polymer contains 150 weight ppm or more of silicon.

5. The conjugated diene polymer according to any one of claims 1 to 4, wherein the conjugated diene polymer has an ionic strength index of 0.5 to 60%.

6. The conjugated diene polymer according to any one of claims 1 to 5, wherein the conjugated diene polymer has a molecular weight distribution curve where two or more peaks are present.

7. The conjugated diene polymer according to any one of claims 1 to 6, wherein the conjugated diene polymer has a terminal modifying group.

8. A rubber composition comprising the conjugated diene polymer according to any one of claims 1 to 7, and a filler.

9. A cross-linked rubber prepared by cross-linking the rubber composition according to claim 8.

10. A tire comprising the cross-linked rubber according to claim 9.

**INTERNATIONAL SEARCH REPORT**

International application No.
**PCT/JP2021/037212**

**A. CLASSIFICATION OF SUBJECT MATTER**

***B60C 1/00***(2006.01)i; ***C08F 36/04***(2006.01)i; ***C08G 81/02***(2006.01)i; ***C08L 9/00***(2006.01)i; ***C08K 3/011***(2018.01)i; ***C08K 3/013***(2018.01)i
FI: C08G81/02; C08L9/00; C08K3/013; C08K3/011; B60C1/00 Z; C08F36/04

According to International Patent Classification (IPC) or to both national classification and IPC

**B. FIELDS SEARCHED**

Minimum documentation searched (classification system followed by classification symbols)

B60C1/00; C08F36/04; C08G81/02; C08L9/00; C08K3/011; C08K3/013

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2012-172077 A (ASAHI KASEI CHEMICALS CORP.) 10 September 2012 (2012-09-10) claims, paragraphs [0017], [0025], examples | 1-4, 6-10<br>5 |
| X | WO 2018/164053 A1 (ASAHI KASEI MATERIALS CORP.) 13 September 2018 (2018-09-13) claims, paragraphs [0013], [0134], examples | 1-10 |
| X | JP 2020-33546 A (ASAHI KASEI CORP.) 05 March 2020 (2020-03-05) claims, paragraphs [0015], [0191], examples | 1-10 |
| X | JP 2020-37678 A (ASAHI KASEI CORP.) 12 March 2020 (2020-03-12) claims, paragraphs [0015], [0178], examples | 1-10 |
| A | WO 2011/105362 A1 (NIPPON ZEON CO.) 01 September 2011 (2011-09-01) entire text | 1-10 |
| A | JP 2016-47885 A (THE YOKOHAMA RUBBER CO., LTD.) 07 April 2016 (2016-04-07) entire text, all drawings | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 December 2021** | **14 December 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2021/037212**

**C. DOCUMENTS CONSIDERED TO BE RELEVANT**

| Category* | Citation of document, with indication, where appropriate, of the relevant passages | Relevant to claim No. |
|---|---|---|
| A | JP 2018-123225 A (ASAHI KASEI CORP.) 09 August 2018 (2018-08-09) entire text | 1-10 |
| A | JP 2019-199512 A (NIPPON ZEON CO.) 21 November 2019 (2019-11-21) entire text | 1-10 |
| A | JP 2019-199546 A (THE YOKOHAMA RUBBER CO., LTD.) 21 November 2019 (2019-11-21) entire text, all drawings | 1-10 |
| A | JP 2020-41136 A (ASAHI KASEI CORP.) 19 March 2020 (2020-03-19) entire text | 1-10 |

Form PCT/ISA/210 (second sheet) (January 2015)

**INTERNATIONAL SEARCH REPORT**
**Information on patent family members**

International application No.
**PCT/JP2021/037212**

| Patent document cited in search report | Publication date (day/month/year) | Patent family member(s) | Publication date (day/month/year) |
|---|---|---|---|
| JP 2012-172077 A | 10 September 2012 | (Family: none) | |
| WO 2018/164053 A1 | 13 September 2018 | US 2020/0031975 A1<br>claims, paragraphs [0054], [0055], [0370], examples<br>EP 3594251 A1<br>KR 10-2019-0095481 A<br>CN 110325556 A<br>TW 201837063 A | |
| JP 2020-33546 A | 05 March 2020 | CN 110857344 A<br>KR 10-2020-0023215 A | |
| JP 2020-37678 A | 12 March 2020 | DE 102019123052 A1<br>CN 110872405 A | |
| WO 2011/105362 A1 | 01 September 2011 | US 2013/0012651 A1<br>entire text<br>EP 2540747 A1<br>CN 102762598 A<br>KR 10-2012-0138752 A | |
| JP 2016-47885 A | 07 April 2016 | (Family: none) | |
| JP 2018-123225 A | 09 August 2018 | (Family: none) | |
| JP 2019-199512 A | 21 November 2019 | (Family: none) | |
| JP 2019-199546 A | 21 November 2019 | EP 3795629 A1<br>entire text, all drawings | |
| JP 2020-41136 A | 19 March 2020 | DE 102019123663 A1<br>CN 110878151 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018147312 A


### Non-patent literature cited in the description


- **SARDELIS, K. ; MICHELS, H. J. ; ALLEN, G.** *Polymer,* 1984, vol. 25, 1011